# EUROPÄISCHE PATENTANMELDUNG

(11) **EP 4 530 016 A1**
(43) Veröffentlichungstag der Anmeldung: **02.04.2025**
(21) Anmeldenummer: 24199651.1
(22) Anmeldetag: 11.09.2024
(51) Int. Cl.: B24B 39/00

(54) **VERFAHREN UND VORRICHTUNG ZUR SPANLOSEN ZAHNFLANKENMODIFIKATION EINES ZAHNRADS**

(30) Priorität: 15.09.2023 DE 102023124974
(71) Anmelder: SHW Powder Systems GmbH, 73433 Aalen-Wasseralfingen (DE)
(72) Erfinder: Schäfer, Steffen Felix, 89551 Königsbronn (DE); Krüger, Michael, 73460 Hüttlingen (DE); Eiberger, Anton, 73488 Ellenberg (DE)
(74) Vertreter: SSM Sandmair

(57) **Zusammenfassung**

Verfahren zur spanlosen Zahnflankenmodifikation, insbesondere zur spanlosen Herstellung einer Breitenballigkeit, bei einem Zahnrad (20), bei dem das Zahnrad (20) in einer Haltevorrichtung (31, 32, 33, 34) fixiert wird, das Zahnrad (20) mit einer Matrize (10) eine Ausgangstellung einnimmt, bei der das Zahnrad (20) und die Matrize (10) ein Innenzahnradpaar bilden, die Haltevorrichtung (31, 32, 33, 34) mit dem Zahnrad (20) eine Taumelbewegung um einen Zahnrad-Taumelpunkt auf einer Zahnradachse (21) ausführt, und/oder die Matrize (10) eine Taumelbewegung um einen Matrizen-Taumelpunkt (T_{M}) auf einer Matrizenachse (11) ausführt, so dass die Matrize (10), insbesondere Zahnflanken der Matrize (10), partiell Druck auf die Zahnflanken (23; 25) des Zahnrads (20) ausübt und die Zahnflanken (23; 25) des Zahnrads (23;25) umformt.

## Beschreibung

Die Erfindung betrifft ein Verfahren zur spanlosen Zahnflankenmodifikation, insbesondere zur spanlosen Herstellung einer Breiten- und/oder Höhenballigkeit, bei einem Zahnrad sowie eine Vorrichtung zur spanlosen Zahnflankenmodifikation, insbesondere zur spanlosen Herstellung einer Breiten- und/oder Höhenballigkeit, bei einem Zahnrad. Des Weiteren betrifft die Erfindung ein Zahnrad, welches mit dem Verfahren zur spanlosen Zahnflankenmodifikation hergestellt, insbesondere nachbearbeitet wurde, und/oder ein Zahnrad, welches mit Hilfe der Vorrichtung zur spanlosen Zahnflankenmodifikation hergestellt, insbesondere nachbearbeitet, wurde. Sowohl bei dem Verfahren als auch bei der Vorrichtung bildet das zu bearbeitende Zahnrad mit einem Werkzeug, insbesondere mit einer Matrize zur Bearbeitung des Zahnrads, vorzugsweise ein Innenzahnradpaar, wobei das Werkzeug und/oder das Zahnrad taumelnd gelagert sind/ist und eine Taumelbewegung durchführen können/kann.

Bei der Herstellung von Zahnrädern, insbesondere beim Urformen von Zahnrädern durch beispielsweise Sintern oder Gießen, kann es zu Abweichungen der sogenannten Mikrogeometrie des Zahnrads, insbesondere der Zahnflanken und/oder der Zahnkopfflächen, kommen. Das kann eine Nachbearbeitung erforderlich machen, um diese Abweichungen zu korrigieren und die Zahngeometrie auf die gewünschten Spezifikationen einzustellen.

Die Mikrogeometrie eines Zahnrads bezieht sich insbesondere auf die detaillierte Form und Eigenschaften der Zahnflanken und der Zahnkopffläche auf einer mikroskopischen Skala. Dazu können insbesondere Unregelmäßigkeiten und Unebenheiten der Zahnflanken und der Zahnkopffläche gehören sowie Profilverschiebungen, welche die Abweichung der tatsächlichen Zahnform von der idealen theoretischen Zahnform beschreiben.

Derartige Abweichungen, insbesondere Abweichungen der Zahnflanken, können sich insbesondere auf die Lebensdauer des Zahnrads durch Reibung und Verschleiß als auch auf die Geräuschentwicklung bei dessen Betrieb auswirken. Insbesondere können einzelne Zähne des Zahnrads beispielsweise durch Profilverschiebungen stärker belastet werden als andere Zähne. Eine solche örtliche Überbelastung einzelner Zähne kann im schlimmsten Fall zu einem Zahnbruch führen und die Lebensdauer des Zahnrads negativ beeinflussen.

Nicht nur Herstellungsbedingte Unregelmäßigkeiten in der Zahngeometrie können die Lebensdauer von Zahnrädern negativ beeinflussen. Auch kann es beispielsweise bei Getrieben zu Verformungen und/oder Verkippungen des Welle-Lager-Systems im Betrieb kommen, wodurch es zu einer ungleichmäßigen Lastverteilung über die Zahnbreite, insbesondere entlang der Zahnflankenlinie der einzelnen Zähne, kommen kann.

Unter einem Getriebe wird dabei allgemein ein Maschinenelement verstanden, mit welchem Bewegungsgrößen, insbesondere Drehmomente und Kräfte, übertragen und/oder geändert werden. Ein Getriebe besteht normalerweise aus einer Reihe von Zahnrädern oder Zahnradpaaren, die miteinander in Eingriff stehen. Die Zahnräder sind für gewöhnlich auf Wellen montiert und durch Lager unterstützt, um eine reibungslose Rotation zu ermöglichen. Dieses Wellen-Lagersystem kann sich beispielsweise unter Last oder im Dauerbetrieb verformen und/oder verkippen.

Dies kann, insbesondere bei Außen- oder Innenverzahnten Stirnrädern, dazu führen, dass die Last entlang der Zahnflankenlinie in Richtung der axialen Enden des Zahnrads zunimmt. Bei diesen sogenannten Kantenträgern tritt die Hauptlast im Bereich eines der axialen Enden der einzelnen Zähne auf, so dass die Zähne an dieser Stelle übermäßig beansprucht werden. Dies kann ebenfalls zu Zahnschäden und Zahnbruch führen. Auch kann eine ungleichmäßige Lastverteilung über die Zahnbreite zu einer erheblichen Geräuschentwicklung während des Betriebs des Zahnrads beitragen.

Daher spielt die Auslegung der Mikrogeometrie von Zahnrädern während der Entwicklung von Getrieben eine große Rolle. So ist es beispielsweise für die Haltbarkeit von Getrieben sowie deren Geräuschentwicklung während ihres Betriebs wichtig die darin verbauten Zahnräder entsprechend ihres Einsatzortes und ihrer Belastung nicht nur im Hinblick auf ihre allgemeine Form, Größe und Geometrie auszulegen, sondern auch in Bezug auf ihre Mikrogeometrie.

Bei der Auslegung von Zahnrädern spielt beispielsweise die Balligkeit, insbesondere die Breitenballigkeit, eine wichtige Rolle, da sie die Belastbarkeit und die Tragfähigkeit des Zahnrads beeinflussen kann. Die Balligkeit, insbesondere die Breitenballigkeit, ist eine wichtige Eigenschaft bei der Gestaltung und Herstellung von Zahnrädern, insbesondere bei hochpräzisen Anwendungen wie in der Automobilindustrie, Luft- und Raumfahrt oder bei Präzisionsgetrieben, bei welchen eine reibungslose und geräuscharm Leistung erforderlich ist.

Aus dem Stand der Technik sind Verfahren zur Zahnflankenmodifikation, insbesondere zur Herstellung einer Balligkeit von Zahnflanken bekannt, bei welchen die Zahnflanken spanend bearbeitet werden. Insbesondere sogenannte Wälzschleifverfahren werden für die Feinbearbeitung von Zahnrädern eingesetzt.

Beim Wälzschleifen wird ein rotierendes Schleifwerkzeug, insbesondere eine Wälzschnecke, in den Zahneingriff mit dem zu bearbeitenden Zahnrad gebracht und die Zahnflanken schleifend bearbeitet. Nachteilig an den bekannten Wälzschleifverfahren ist, dass es sich dabei um ein spanendes Verfahren handelt, bei welchem Material des Zahnrads in Form von Spänen aktiv abgetragen wird.

Dabei wird bedingt durch die große Reibung sehr viel Wärme freigesetzt, welche sich wiederrum negativ auf das Materialgefüge des Zahnrads auswirken kann. Um die entstehende Wärme abzuführen, werden in der Regel Kühlschmierstoffe eingesetzt. Diese können jedoch schädlich für die Umwelt und/oder den Menschen sein und müssen fachgerecht entsorgt werden. Auch können sich die Kühlschmierstoffe auf dem Zahnrad absetzten und einen Film auf dem Zahnrad bilden.

Daher müssen Zahnräder vor ihrem Einsatz gründlich gereinigt werden, um Spanrückstände, welche zu einer Beschädigung des Getriebes führen können, sorgfältig zu entfernen. Des Weiteren hinterlassen Wälzschleifmaschinen, insbesondere bei fortschreitender Abnutzung der Wälzschnecke, auf den Zahnflanken Riefen, welche orthogonal zu der Zahnradachse verlaufen und ebenfalls zu unerwünschten Effekten führen können, wie zum Beispiel Geräuschbildung und Verschlechterung der Getriebeleistung.

Es ist daher eine Aufgabe der Erfindung ein Verfahren und eine Vorrichtung zur spanlosen Zahnflankenmodifikation bereitzustellen, insbesondere ein Verfahren und eine Vorrichtung zur spanlosen Herstellung einer Balligkeit bei einem Zahnrad. Des Weiteren ist es eine Aufgabe der Erfindung ein Zahnrad bereitzustellen, welches keine oder nur geringe Riefen in den Zahnflanken, insbesondere orthogonal zu der Zahnradachse, aufweist.

Die Aufgabe wird durch die Ansprüche 1, 7 und 17 gelöst.

Unter dem Begriff Balligkeit soll im Rahmen der Anmeldung Zahnflankenmodifikationen verstanden werden, die zu einer beabsichtigten Zahndickenänderung am radial inneren und/oder radial äußeren Zahnende und/oder in Richtung wenigstens eines der axialen Zahnenden führen. Unter den axialen Zahnenden werden insbesondere die Enden in Richtung der Zahnradachse verstanden. Das obere Zahnende ist das Ende im Bereich des Kopfkreises, während das untere Ende im Bereich des Fußkreises ausgebildet ist.

Unter der Breitenballigkeit wird im Rahmen der Anmeldung die Abweichung der tatsächlichen Zahnflankenlinie von der theoretisch idealen Zahnflankenlinie über die Breite des einzelnen Zahns verstanden. Die Breitenballigkeit wird durch eine gezielte Rücknahme von Material der Zahnflanken im Bereich der axialen Enden oder eines der axialen Enden erreicht.

Dabei soll im Zuge der Erfindung unter der Breitenballigkeit nicht nur eine symmetrische Balligkeit verstanden werden, bei welcher die Zahnflankenlinie beispielsweise einen Ellipsenbogen, insbesondere Kreisbogen, beschreibt, sondern auch eine lineare Rücknahme über wenigstens einen Teil der Zahnbreite und/oder eine Rücknahme nur im Bereich der axialen Enden der Zahnflanken.

Unter Höhenballigkeit wird im Rahmen der Anmeldung die Abweichung der tatsächlichen Zahnflanke von ihrer theoretischen Form in Profilrichtung verstanden. Die Höhenballigkeit wird durch eine gezielte Rücknahme von Material der Zahnflanken im Bereich des Kopfkreises und/oder im Bereich des Fußkreises erreicht, so dass die Ist-Profillinie zum Zahninneren hin gekrümmt ist.

Dabei soll im Zuge dieser Erfindung unter der Höhenballigkeit nicht nur eine symmetrische Balligkeit verstanden werden, bei welcher die Zahnflanken beispielsweise einen Ellipsenbogen, insbesondere Kreisbogen, beschreibt, sondern auch eine lineare Rücknahme über wenigstens einen Teil der Zahnhöhe und/oder eine Rücknahme nur im Bereich des oberen oder unteren Endes der Zahnflanken.

Die Erfindung betrifft ein Verfahren und eine Vorrichtung zur spanlosen Zahnflankenmodifikation bei einem Zahnrad. Insbesondere betrifft die Erfindung ein Verfahren und eine Vorrichtung zur spanlosen Herstellung einer Balligkeit, beispielsweise Breiten- oder Höhenballigkeit. Die Erfindung betrifft vorzugsweise ein Verfahren und eine Vorrichtung zur spanlosen Herstellung einer Breitenballigkeit bei einem Zahnrad. Die Erfindung betrifft vorzugsweise ein spannloses Verfahren und eine Vorrichtung zur Bearbeitung der Mikrogeometrie eines Zahnrads.

Unter der Mikrogeometrie eines Zahnrads soll insbesondere die detaillierte Form und Eigenschaften der Zahnflanken und der Zahnkopfflächen verstanden werden. Im Gegensatz dazu beschreibt die Makrogeometrie die allgemeine Form, Größe und Geometrie des zu bearbeitenden Zahnrads, beispielsweise die Anzahl der Zähne, die Zahnbreite oder den Kopfkreis- oder Fußkreisdurmesser.

Das Verfahren und die Vorrichtung kann zur spanlosen Zahnflankenmodifikation eines Stirnrads eingesetzt werden. Das Zahnrad kann sowohl ein innenverzahntes als auch außenverzahntes Zahnrad sein. Vorzugsweise dient das Verfahren und die Vorrichtung zur spanlosen Zahnflankenmodifikation eines außenverzahnten oder innenverzahnten Stirnrads.

Das Verfahren und die Vorrichtung sind nicht auf die Bearbeitung von Zahnrädern einer bestimmten Verzahnungsart beschränkt. Mit dem Verfahren und der Vorrichtung können beispielsweise geradverzahnte Zahnräder, bei welchem die Zähne achsparallel verlaufen, als auch schrägverzahnte Zahnräder, bei welchen die Zähne nicht paraallel zur Zahnradachse verlaufen, spanlos bearbeitet werden. Auch können mit dem Verfahren und der Vorrichtung Zahnräder mit unterschiedlichen Verzahnungsarten spanlos bearbeitet werden, wie z.B. Zahnräder mit Evolventenverzahnung, Zykloidenverzahnung, Triebstockverzahnung oder Wildhaber-Novikov-Verzahnung. Auch können mit dem Verfahren und der Vorrichtung Riemenräder oder Kettenräder bearbeitet werden.

Das Verfahren umfasst vorzugsweise folgende Schritte: 1. Fixieren des Zahnrads in einer Haltevorrichtung. 2. Einnehmen einer Ausgangstellung, in welcher das Zahnrad und eine Matrize ein Innzahnradpaar bilden. 3. Ausführen einer Taumelbewegung der Haltevorrichtung mit dem fixierten Zahnrad um einen Zahnrad-Taumelpunkt auf der Zahnradachse und/oder Ausführen einer Taumelbewegung der Matrize um einen Matrizen-Taumelpunkt auf einer Matrizenachse.

Bei dem Verfahren kann das zu bearbeitende Zahnrad in einer Haltevorrichtung fixiert, insbesondere verspannt werden. Zu diesem Zweck kann das Zahnrad in der Haltevorrichtung beispielsweise durch ein axiales Verfahren eines Unterstempels und/oder eines Oberstempels der Haltevorrichtung in der Haltevorrichtung fixiert werden. Insbesondere kann das Zahnrad durch ein axiales Verfahren des Unterstempels und/oder des Oberstempels in der Haltevorrichtung axial verspannt werden. Vorzugsweise können/kann der Unterstempel und/oder der Oberstempel in Richtung der Mittelachse des Zahnrads axial verfahren werden, um das Zahnrad in der Haltevorrichtung zu fixieren, insbesondere in der Haltevorrichtung zu verspannen.

Das Zahnrad kann beispielsweise mittels eines Dorns in der Haltevorrichtung positioniert bzw. ausgerichtet werden. Alternativ oder zusätzlich kann das Zahnrad in eine Einführmaske eingelegt werden, um das Zahnrad in der Haltevorrichtung zu positionieren oder auszurichten.

Das Zahnrad kann zu Positionierung beispielsweise auf den Dorn aufgesteckt werden, so dass der Dorn in oder durch das Zahnrad ragt, und/oder in die Einführmaske eingelegt werden. Der Unterstempel oder der Oberstempel kann beispielsweise anschließend axial verfahren werden, um das Zahnrad in der Haltevorrichtung zu fixieren, vorzugsweise zu verspannen. In alternativen Ausführungen können sowohl der Unterstempel als auch der Oberstempel axial verfahren, um das Zahnrad in der Haltevorrichtung zu fixieren, vorzugsweise zu verspannen. Beispielsweise kann die Positionierung auch während des Verfahrens des Unter- und/oder Oberstempels geschehen.

Ist das Zahnrad in der Haltevorrichtung fixiert, insbesondere verspannt, können das Zahnrad und die Matrize eine Ausgangstellung einnehmen, bei der das Zahnrad und die Matrize ein Innenzahnradpaar bilden. Insbesondere kann die Haltevorrichtung mit dem Zahnrad eine Ausgangstellung einnehmen, so dass das Zahnrad mit der Matrize ein Innenzahnradpaar bildet.

Bei einem Innenzahnradpaar umgibt eines aus Zahnrad und Matrize das jeweils andere aus Zahnrad und Matrize. Beispielsweise kann das Zahnrad ein außenverzahntes Zahnrad sein und die Matrize eine Innenverzahnte Matrize, welche das Zahnrad umgibt. Auch kann das Zahnrad ein innenverzahntes Zahnrad sein und die Matrize eine außenverzahnte Matrize, welche von dem Zahnrad umgeben wird. Bei einem Innenzahnradpaar können die Zahnradachse und die Matrizenachse, insbesondere in der Ausgangstellung, parallel zueinander sein oder, insbesondere in der Bearbeitungsstellung, einen Winkel miteinander einschließen.

Vorzugsweise sind die Zahnradachse und die Matrizenachse in der Ausgangstellung des Verfahrens parallel, insbesondere koaxial. D.h. vorzugsweise ist die Zahnradachse in der Ausgangstellung des Zahnrads und der Matrize parallel zu der Matrizenachse. Unter der Zahnradachse soll insbesondere die Mittelachse des zu bearbeitenden Zahnrads, vorzugsweise die Rotationsachse des zu bearbeitenden Zahnrads, verstanden werden. Unter der Matrizenachse soll insbesondere die Mittelachse der Matrize verstanden werden.

Vorzugsweise bilden das Zahnrad und die Matrize in der Ausgangstellung ein Innenzahnradpaar, bei dem jeder Zahn des Zahnrads jeweils einer Zahnlücke der Matrize gegenübersteht. D.h. vorzugsweise weisen das Zahnrad und die Matrize die gleiche Zähnezahl auf, wobei in der Ausgangstellung jeweils ein Zahn des Zahnrads einer Zahnlücke der Matrize zugewiesen ist.

Die Matrize zur spanlosen Zahnflankenmodifikation kann insbesondere eine Negativform des zu bearbeitenden Zahnrads sein. Die Matrize und das Zahnrad können in der Ausgangstellung eine Spiel- Übergangs- oder Presspassung aufweisen. Vorzugsweise weisen die Matrize und das Zahnrad in der Ausgangstellung entweder eine Spiel- oder eine Presspassung auf, insbesondere jedoch keine Übergangspassung. Insbesondere können die Matrize und das Zahnrad in der Bearbeitungsstellung eine Übergangspassung aufweisen, wobei es beispielsweise in axialer Richtung entlang der einzelnen Zahnflanken der Matrize und des Zahnrads zu einem Wechsel zwischen Spiel- und Presspassung kommen kann.

Weisen die Matrize und das Zahnrad in der Ausgangstellung eine Presspassung auf, ist zwischen dem Zahnrad und der Matrize kein Spalt ausgebildet. Weisen die Matrize und das Zahnrad eine Presspassung auf, werden die Matrize und das Zahnrad vorzugsweise in der Ausgangstellung ineinander verpresst.

So kann beispielsweise ein außenverzahntes Zahnrad in die Matrize oder eine außenverzahnte Matrize in das Zahnrad eingepresst werden. Dabei kann der Druck sowohl auf die Matrize als auch auf das Zahnrad ausgeübt werden, unabhängig davon, ob es sich beispielsweise um ein außen- oder Innenverzahntes Zahnrad handelt. Vorzugsweise wird der Druck auf das außenverzahnte Zahnrad bzw. die außenverzahnte Matrize ausgeübt.

Durch das Einpressen des Zahnrads oder der Matrize in der Ausgangsstellung, kann das Zahnrad bereits einer Vorumformung unterliegen. Beispielsweise kann das Zahnrad, insbesondere die Zahnflanken des Zahnrads, vorverdichtet werden. Durch das Einpressen kann beispielsweise die Oberflächengüte des Zahnrads, insbesondere die Zahnflanken des Zahnrads, positiv beeinflusst werden.

Weisen die Matrize und das Zahnrad in der Ausgangstellung eine Spielpassung auf, kann zwischen der Matrize und dem Zahnrad ein Spalt ausgebildet sein. Ist zwischen der Matrize und dem Zahnrad ein Spalt ausgebildet, kann der Spalt so groß sein, dass in der Ausgangstellung die Zähne des Zahnrads nicht mit den Zahnlücken der Matrize kämmen. Vorzugsweise ist der Spalt so groß, dass die Zähne des Zahnrads mit den Zahnlücken der Matrize in radialer Richtung überlappen, d.h. dass jeder Zahn des Zahnrads wenigstens teilweise radial in eine Zahnlücke der Matrize ragt.

Nachdem das Zahnrad mit der Matrize die Ausgangstellung eingenommen hat, kann beispielsweise die Haltevorrichtung mit dem Zahnrad eine Taumelbewegung um einen Zahnrad-Taumelpunkt auf der Zahnradachse ausführen, so dass die Matrize, insbesondere die Zahnflanken der Matrize, partiell Druck auf das Zahnrad, insbesondere auf die Zahnflanken des Zahnrads, ausübt.

Alternativ oder zusätzlich kann die Matrize eine Taumelbewegung um einen Matrizen-Taumelpunkt auf der Matrizenachse ausführen, so dass die Matrize, insbesondere die Zahnflanken der Matrize, partiell Druck auf das Zahnrad, insbesondere auf die Zahnflanken des Zahnrads, ausübt.

Durch die Taumelbewegung des Zahnrads und/oder der Matrize kann insbesondere der Spalt zwischen der Matrize und dem Zahnrad partiell überwunden werden, so dass die Matrize, insbesondere die Zahnflanken der Matrize, partiell in Kontakt mit dem Zahnrad, insbesondere mit den Zahnflanken des Zahnrads, kommt und das Zahnrad, insbesondere die Zahnflanken, an der oder den entsprechenden Kontaktstelle/n umgeformt wird. Die Umformung des Zahnrads, insbesondere der Zahnflanken, wird insbesondere nur durch die reine Taumelbewegung des Zahnrads und/oder der Matrize bewirkt. D.h. die Umformung des Zahnrads, insbesondere der Zahnflanken, wird vorteilhaft nicht durch eine Rotation des Zahnrads und/oder der Matrize um die jeweilige Rotationsachse bewirkt. Während der Umformung des Zahnrads, insbesondere der Zahnflanken, findet dabei vorteilhaft keine Rotation des Zahnrads und/oder der Matrize um die jeweilige Rotationsachse statt.

Der Spalt kann nach der Umformung des Zahnrads, insbesondere nach der Umformung der Zahnflanken, größer sein als er in der Ausgangstellung war. Insbesondere kann der Spalt im Bereich der axialen Enden der Zahnflanken nach dem Verfahren, insbesondere nach der Umformung der Zahnflanken, größer sein als in der Ausgangstellung. Auch kann der Spalt, insbesondere das Spaltmaß, nach dem Ausführen des Verfahrens, insbesondere nach Umformung der Zahnflanken, entlang der Zahnflankenlinie der einzelnen Zähne des Zahnrads variieren.

Der Spalt, insbesondere das Spaltmaß, kann in der Ausgangstellung, insbesondere vor der Umformung der Zahnflanken, entlang der Zahnflankenlinie der einzelnen Zähne des Zahnrads variieren. Alternativ kann der Spalt, insbesondere das Spaltmaß, in der Ausgangstellung, insbesondere vor der Umformung der Zahnflanken, entlang der Zahnflankenlinie der einzelnen Zähne des Zahnrads überall gleich groß sein. Durch gezielte Einstellung des Spalts kann insbesondere der Grad der durch das Verfahren erzielten Umformung eingestellt werden.

Bei dem Verfahren zur spanlosen Zahnflankenmodifikation kann es insbesondere eine Totzone für die Umformung geben. In der Totzone wird das Zahnrad, insbesondere die Zahnflanken des Zahnrads, nicht durch die Matrize, insbesondere den Zahnflanken der Matrize, umgeformt. In der Totzone kommt das Zahnrad, insbesondere die Zahnflanken des Zahnrads, vorzugsweise nicht in Kontakt mit der Matrize, insbesondere den Zahnflanken der Matrize. Insbesondere übt die Matrize, insbesondere die Zahnflanken der Matrize, im Bereich der Totzone partiell keinen Druck auf das Zahnrad, insbesondere auf die Zahnflanken des Zahnrads, aus.

Die Breite der Totzone in axialer Richtung ist dabei proportional zu dem Spalt zwischen Zahnrad und Matrize in der Ausgangstellung. Umso größer der Spalt zwischen der Matrize und dem Zahnrad ist, desto größer kann dabei die Totzone sein. Ist zwischen der Matrize und dem zu bearbeitenden Zahnrad der Spalt gleich 0, d.h. sind die Matrize und das zu bearbeitenden Zahnrad in der Ausgangstellung, insbesondere an den jeweiligen Zahnflanken, in Kontakt, wird das Zahnrad, insbesondere die Zahnflanken des Zahnrads, vorzugsweise über die gesamte Zahnbreite umgeformt und es entsteht keine Totzone.

Bei der Taumelbewegung der Haltevorrichtung wird die Zahnradachse aus der Ausgangstellung um einen Taumelwinkel α ausgelenkt, insbesondere verschwenkt. Der Taumelwinkel α ist vorzugsweise ungleich 0° ist. Der Taumelwinkel der Haltevorrichtung kann vorzugsweise durch einen Aktuator, welcher die Haltevorrichtung in die Taumelbewegung versetzen kann, eingestellt und/oder gesteuert werden.

Insbesondere kann die Taumelbewegung der Haltevorrichtung mit dem Zahnrad über mindestens zwei Aktuatoren, insbesondere über mindestens drei Aktuatoren, eingestellt und/oder gesteuert werden. Die Aktuatoren können beispielsweise durch jeweils einen axial verstellbaren Stempel ausgebildet sein, welcher die Haltevorrichtung mit dem Zahnrad an dem jeweiligen Angriffspunkt des Aktuators in axialer Richtung, insbesondere entlang einer vertikalen Geraden, verstellen kann. Insbesondere können die Aktuatoren die Haltevorrichtung an dem jeweiligen Angriffspunkt absenken oder anheben. Durch eine gezielte Ansteuerung der Aktuatoren kann die Haltevorrichtung in eine Taumelbewegung versetzt werden. Die vertikalen Geraden sind vorzugsweise parallel zueinander orientiert.

Durch die Einstellung des Taumelwinkels lässt sich die Zahnflankenmodifikation, insbesondere die Breitenballigkeit, steuern und definieren. So kann ein größerer Taumelwinkel beispielsweise eine größere Umformung bewirken als ein kleinerer Taumelwinkel.

Die Punkte der Zahnradachse beschreiben während der Taumelbewegung vorzugsweise eine Kurve, die sogenannten Taumelkurve. Die Taumelkurven der Zahnradachse weisen dabei für alle Punkte dieselbe Form auf. D.h. beispielsweise folgen alle Punkte einer kreisförmigen, elliptischen oder rechteckigen Taumelkurve.

Wenn im Zuge der Erfindung beispielsweise von einer kreisförmigen Taumelbewegung die Rede ist, bedeutet dies, dass die einzelnen Punkte der Zahnradachse, mit Ausnahme des Zahnrad-Taumelpunkts, einer kreisförmige Taumelkurve folgen. Dabei nehmen die Radien der Taumelkurven für die einzelnen Punkte mit dem Abstand zu dem Zahnrad-Taumelpunkt zu. D.h. der Radius der Taumelkurve verhält sich proportional zu dem Abstand der Taumelkurve von dem Zahnrad-Taumelpunkt.

Führt die Haltevorrichtung mit dem Zahnrad beispielsweise eine kreisförmige Taumelbewegung aus, so beschreibt die Zahnradachse bei einer vollständigen Taumelbewegung die Mantelfläche eines Kreiskegels, wobei der Zahnrad-Taumelpunkt die Kegelspitze bildet. Insbesondere kann die Zahnradachse bei einer kreisförmigen Taumelbewegung einen Doppelkegel mit gegeneinander gerichteten Spitzen beschreiben, wobei sich die Spitzen in dem Zahnrad-Taumelpunkt berühren.

Wenn im Zuge der Erfindung von einer Taumelbewegung der Haltevorrichtung mit dem Zahnrad die Rede ist, wird darunter insbesondere ausschließlich die Bewegung der Zahnradachse entlang der Taumelkurve verstanden. Bei der reinen Taumelbewegung führen die Haltevorrichtung und das Zahnrad keine Rotation um die Zahnradachse aus. Die Haltevorrichtung mit dem Zahnrad wird insbesondere in verschiedene Richtungen verschwenkt, ohne dabei eine Eigenrotation um die Zahnradachse auszuführen. Insbesondere behält die Haltevorrichtung mit dem Zahnrad ihre wesentliche Orientierung im Raum.

Für den Fall, dass die Haltevorrichtung mit dem Zahnrad in der Ausgangstellung beispielsweise im Wesentlichen parallel zu der horizontalen Ebene ausgebildet ist, ändern die Punkte der Haltevorrichtung und des Zahnrads ausschließlich ihre vertikale Lage während der Taumelbewegung. Die einzelnen Punkte der Haltevorrichtung mit dem Zahnrad ändern ihre Lage beim Ausführen der reinen Taumelbewegung vorzugsweise nur entlang einer vertikalen Geraden, insbesondere entlang einer geraden parallel zur Schwerkraft.

Die Erfindung ist nicht auf kreisförmige Taumelbewegungen der Haltevorrichtung begrenzt. So kann die Haltevorrichtung beispielsweise auch eine elliptische, rechteckige oder vieleckige Taumelbewegung ausführen, so dass die einzelnen Punkte der Zahnradachse einer elliptischen, rechteckigen oder vieleckigen Taumelkurve folgen.

Auch kann die Haltevorrichtung eine linienförmige Taumelbewegung ausführen, wobei die Zahnradachse eine Schwenkbewegung um den Zahnrad-Taumelpunkt ausführt, sodass die einzelnen Punkte der Zahnradachse einer Geraden folgen.

Auch kann die Haltevorrichtung eine spiralförmige Taumelbewegung ausführen, wobei die Zahnradachse eine Schwenkbewegung um den Zahnrad-Taumelpunkt ausführt, sodass die einzelnen Punkte der Zahnradachse einer Spirale folgen. Eine spiralförmige Bewegung ist eine Art von Bewegung, bei der sich die einzelnen Punkte entlang einer gekrümmten Bahn bewegen, die sich um einen Mittelpunkt herum windet. Diese Bahn kann insbesondere in Form einer spiralförmigen Linie oder Kurve beschrieben werden. Die einzelnen Punkte können sich dabei entweder dem Mittelpunkt annähern oder von diesem weiter entfernen. Vorzugsweise beschreiben die einzelnen Punkte eine spiralförmige Bewegung, bei welcher der Abstand zu dem Mittelpunkt sich mit der Bewegung vergrößert.

Alternativ oder zusätzlich kann die Matrize eine Taumelbewegung um einen Matrizen-Taumelpunkt auf der Matrizenachse ausführen. Insbesondere kann die Haltevorrichtung mit dem Zahnrad eine reine Taumelbewegung ausführen, während die Matrize unbewegt bleibt, oder die Matrize kann eine reine Taumelbewegung ausführen, während die Haltevorrichtung unbewegt bleibt. Auch können sowohl die Haltevorrichtung mit dem Zahnrad als auch die Matrize eine reine Taumelbewegung ausführen. Bei der Taumelbewegung der Matrize wird die Matrizenachse aus der Ausgangstellung um einen Taumelwinkel α ausgelenkt, insbesondere verschwenkt. Der Taumelwinkel ist vorzugsweise α ungleich 0° ist.

Der Taumelwinkel der Matrize kann vorzugsweise durch einen Aktuator, welcher die Matrize in die Taumelbewegung versetzen kann, eingestellt werden. Insbesondere kann die Taumelbewegung der Matrize über mindestens zwei Aktuatoren, insbesondere über mindestens drei Aktuatoren, eingestellt und/oder gesteuert werden. Die Aktuatoren können beispielsweise durch jeweils einen axial verstellbaren Stempel ausgebildet sein, welcher die Matrize an dem jeweiligen Angriffspunkt des Aktuators in axialer Richtung, insbesondere entlang einer vertikalen Geraden, verstellen kann. Insbesondere können die Aktuatoren die Matrize an dem jeweiligen Angriffspunkt absenken oder anheben. Durch eine gezielte Ansteuerung der Aktuatoren kann die Matrize in eine Taumelbewegung versetzt werden. Die vertikalen Geraden sind vorzugsweise parallel zueinander orientiert.

Durch die Einstellung des Taumelwinkels lässt sich die Zahnflankenmodifikation, insbesondere die Breitenballigkeit, steuern und definieren. So kann ein größerer Taumelwinkel beispielsweise eine größere Umformung bewirken als ein kleinerer Taumelwinkel.

Die Punkte der Matrizenachse beschreiben während der Taumelbewegung eine Kurve, die sogenannten Taumelkurve. Die Taumelkurven der Matrizenachse weisen dabei für alle Punkte dieselbe Form auf. D.h. beispielsweise folgen alle Punkte einer kreisförmige, elliptischen oder rechteckigen Taumelkurve.

Wenn im Zuge der Erfindung beispielsweise von einer kreisförmigen Taumelbewegung die Rede ist, bedeutet dies, dass die einzelnen Punkte der Matrizenachse, mit Ausnahme des Matrizen-Taumelpunkts, einer kreisförmige Taumelkurve folgen. Dabei nehmen die Radien der Taumelkurve für die einzelnen Punkte mit dem Abstand zu dem Matrizen-Taumelpunkt zu. D.h. der Radius der Taumelkurve verhält sich proportional zu dem Abstand der Taumelkurve von dem Matrizen-Taumelpunkt.

Führt die Matrize beispielsweise eine kreisförmige Taumelbewegung aus, so beschreibt die Matrizenachse bei einer vollständigen Taumelbewegung die Mantelfläche eines Kreiskegels, wobei der Matrizen-Taumelpunkt die Kegelspitze bildet. Insbesondere kann die Matrizenachse bei einer kreisförmigen Taumelbewegung einen Doppelkegel mit gegeneinander gerichteten Spitzen beschreiben, wobei sich die Spitzen in dem Matrizen-Taumelpunkt berühren.

Wenn im Zuge der Erfindung von einer Taumelbewegung der Matrize die Rede ist, wird darunter insbesondere ausschließlich die Bewegung der Matrizenachse entlang der Taumelkurve verstanden. Bei der reinen Taumelbewegung führt die Matrize keine Rotation um die Matrizenachse aus. Die Matrize wird insbesondere in verschiedene Richtungen verschwenkt, ohne dabei eine Eigenrotation um die Matrizenachse auszuführen. Insbesondere behält die Matrize ihre wesentliche Orientierung im Raum. D.h. für den Fall, dass die Matrize in der Ausgangstellung beispielsweise im Wesentlichen parallel zu der horizontalen Ebene ausgebildet ist, ändern die Punkte der Matrize ausschließlich ihre vertikale Lage während der Taumelbewegung.

Die Erfindung ist nicht auf kreisförmige Taumelbewegungen der Matrize begrenzt. So kann die Matrize beispielsweise auch eine elliptische, rechteckige oder vieleckige Taumelbewegung ausführen, so dass die einzelnen Punkte der Matrizenachse einer elliptischen, rechteckigen oder vieleckigen Kurve folgen.

Auch kann die Matrize eine linienförmige Taumelbewegung ausführen, wobei die Matrizenachse eine Schwenkbewegung um den Matrizen-Taumelpunkt ausführt, sodass die einzelnen Punkte der Matrizenachse einer Geraden folgen.

Auch kann die Matrize eine spiralförmige Taumelbewegung ausführen, wobei die Matrizenachse eine Schwenkbewegung um den Matrizen-Taumelpunkt ausführt, sodass die einzelnen Punkte der Matrizenachse einer Spirale folgen. Eine spiralförmige Bewegung ist eine Art von Bewegung, bei der sich die einzelnen Punkte entlang einer gekrümmten Bahn bewegen, die sich um einen Mittelpunkt herum windet. Diese Bahn kann insbesondere in Form einer spiralförmigen Linie oder Kurve beschrieben werden. Die einzelnen Punkte können sich dabei entweder dem Mittelpunkt annähern oder von diesem weiter entfernen. Vorzugsweise beschreiben die einzelnen Punkte eine spiralförmige Bewegung, bei welcher der Abstand zu dem Mittelpunkt sich mit der Bewegung vergrößert.

Die Haltevorrichtung mit dem Zahnrad und/oder die Matrize können/kann eine einmalige oder mehrfach zyklische Taumelbewegung ausführen. Dabei wird im Zuge der Erfindung unter einer einmalig zyklischen Taumelbewegung verstanden, dass ein Punkt, insbesondere jeder Punkt, auf der Zahnradachse und/oder der Matrizenachse die Taumelkurve einmal beschreibt. Bei einer einmalig zyklischen, kreisförmigen Taumelbewegung beschreibt ein Punkt, insbesondere jeder Punkt, der Zahnradachse und/oder der Matrizenachse einmal einen Kreis. Entsprechend wird die Taumelkurve bei einer mehrfach zyklischen Taumelbewegung mehrfach beschrieben.

Der Zahnrad-Taumelpunkt, um welchen beispielsweise die Haltevorrichtung mit dem Zahnrad eine Taumelbewegung ausführen kann, ist vorzugsweise durch den Schnittpunkt der Zahnradachse mit einer Mittelinie des Zahnrads gebildet. Unter der Mittelinie des Zahnrads wird dabei die Linie verstanden, welche die Zahnbreite in einem axialen Querschnitt entlang der Zahnradachse mittig halbiert. D.h. eine Ebene, in welcher die Mittellinie liegt und welche quer zur Zahnradachse ausgebildet ist, halbiert das Zahnrad in axialer Richtung.

Die Haltevorrichtung mit dem Zahnrad führt vorzugsweise die Taumelbewegung um einen Zahnrad-Taumelpunkt aus, welcher sowohl in axialer Richtung als auch quer zur axialen Richtung in der Mitte des Zahnrads ausgebildet ist.

Alternativ oder zusätzlich ist der Matrizen-Taumelpunkt, um welchen beispielsweise die Matrize eine Taumelbewegung ausführen kann, vorzugsweise durch den Schnittpunkt der Matrizenachse mit einer Mittelinie der Matrize gebildet. Unter der Mittelinie der Matrize wird dabei die Linie verstanden, welche die Zahnbreite der Matrize in einem axialen Querschnitt entlang der Matrizenachse mittig halbiert. D.h. eine Ebene, in welche die Mittellinie liegt und welche quer zur Matrizenachse ausgebildet ist, halbiert die Matrize in axialer Richtung.

Die Matrize führt vorzugsweise die Taumelbewegung um einen Matrizen-Taumelpunkt aus, welcher sowohl in axialer Richtung als auch quer zur axialen Richtung in der Mitte der Matrize ausgebildet ist.

Durch das Verfahren zur spanlosen Zahnflankenmodifikation kann sowohl eine symmetrische als auch eine asymmetrische Zahnflankenmodifikation, insbesondere Breitenballigkeit, hergestellt werden. Die Symmetrie bzw. die Asymmetrie kann insbesondere durch axiales Einstellen des Zahnrad-Taumelpunkts und/oder des Matrizen-Taumelpunkts erreicht werden. Das axiale Einstellen des Zahnrad-Taumelpunkts und/oder des Matrizen-Taumelpunkts kann insbesondere durch ein axiales Verfahren der Haltevorrichtung mit dem Zahnrad in Bezug auf die Matrize erfolgen. Alternativ oder zusätzlich kann das axiale Einstellen durch ein axiales Verfahren der Matrize in Bezug auf das in der Haltevorrichtung fixierte Zahnrad erfolgen.

Für eine symmetrische Zahnflankenmodifikation, insbesondere zur Herstellung einer symmetrischen Breitenballigkeit, ist der Zahnrad-Taumelpunkt und/oder der Matrizen-Taumelpunkt auf der Mittelinie des Zahnrads ausgebildet. Vorzugsweise liegen die Mittellinie des Zahnrads und die Mittellinie der Matrize zur Herstellung einer symmetrischen Zahnflankenmodifikation, insbesondere zur Herstellung einer symmetrischen Breitenballigkeit, in der Ausgangstellung aufeinander. Insbesondere können die Mittellinie des Zahnrads und die Mittellinie der Matrize zur Herstellung einer symmetrischen Zahnflankenmodifikation in der Ausgangsstellung einander überlappen. Insbesondere können die Mittellinie des Zahnrads und die Mittellinie der Matrize zur Herstellung einer symmetrischen Zahnflankenmodifikation in der Ausgangstellung identisch sein.

Unter einer symmetrischen Zahnflankenmodifikation, insbesondere unter einer symmetrischen Breitenballigkeit, wird im Zuge der Erfindung eine Umformung der Zahnflanken verstanden, welche symmetrisch ist. Insbesondere zeichnet sich eine symmetrische Zahnflankenmodifikation, insbesondere eine symmetrische Breitenballigkeit, dadurch aus, dass an den beiden axialen Enden der Zahnflanke eines Zahnes die Materialrücknahme bzw. die Umformung gleich groß ist. Weist die Umformung eine Totzone auf, so ist die Totzone im Falle einer symmetrischen Zahnflankenmodifikation, insbesondere einer symmetrischen Breitenballigkeit, in axialer Richtung in der Mitte der Zahnflanke ausgebildet. Beispielsweise kann die Zahnflanke, insbesondere die Zahnflankenlinie, nach der Umformung einen Kreisbogen beschreiben, wobei die Mitte des Kreisbogens auf der Mittelinie des Zahnrads liegt.

Für eine asymmetrische Zahnflankenmodifikation, insbesondere zur Herstellung einer asymmetrischen Breitenballigkeit, weist der Zahnrad-Taumelpunkt und/oder der Matrizen-Taumelpunkt einen Abstand d zu der Mittelinie des Zahnrads auf. Vorzugsweise sind die Mittellinie des Zahnrads und die Mittellinie der Matrize zur Herstellung einer asymmetrischen Zahnflankenmodifikation, insbesondere zur Herstellung einer asymmetrischen Breitenballigkeit, in der Ausgangstellung parallel zueinander und weisen den Abstand d auf.

Unter einer asymmetrischen Zahnflankenmodifikation, insbesondere unter einer asymmetrischen Breitenballigkeit, wird im Zuge der Erfindung eine Umformung der Zahnflanken verstanden, welche asymmetrisch ist. Insbesondere zeichnet sich eine asymmetrische Zahnflankenmodifikation, insbesondere eine asymmetrische Breitenballigkeit, dadurch aus, dass an den beiden axialen Enden der Zahnflanke eines Zahnes die Materialrücknahme unterschiedlich groß ist. Weist die Umformung eine Totzone auf, so ist die Totzone im Falle einer asymmetrischen Zahnflankenmodifikation, insbesondere einer asymmetrischen Breitenballigkeit, in axialer Richtung außermittig der Zahnflanke ausgebildet. Beispielsweise kann die Zahndicke an einem axialen Ende größer sein als an dem anderen axialen Ende des Zahns.

Eine symmetrische oder asymmetrische Zahnflankenmodifikation, insbesondere Breitenballigkeit, kann insbesondere durch den axialen Abstand des Zahnrad-Taumelpunkts und/oder des Matrizen-Taumelpunkts in Bezug auf die Mittellinie des Zahnrads gesteuert werden. Ist der Matrizen-Taumelpunkt und/oder der Zahnrad-Taumelpunkt auf Höhe der Mittelinie des Zahnrads ausgebildet, d.h. weisen Matrizen-Taumelpunkt und/oder der Zahnrad-Taumelpunkt keinen Abstand zu der Mittellinie des Zahnrads auf, kann beispielsweise eine symmetrische Zahnflankenmodifikation erreicht werden. Entsprechend kann beispielsweise durch eine Beabstandung des Zahnrad-Taumelpunkts und/oder des Matrizen-Taumelpunkts zu der Mittellinie des Zahnrads eine asymmetrische Zahnflankenmodifikation erreicht werden.

Führt die Haltevorrichtung mit dem zu bearbeitenden Zahnrad eine Taumelbewegung um den Zahnrad-Taumelpunkt aus und führt die Matrize zeitgleich eine Taumelbewegung um den Matrizen-Taumelpunkt aus, sind die Taumelbewegung der Haltevorrichtung und die Taumelbewegung der Matrize vorzugsweise unterschiedlich, insbesondere gegensätzlich. Insbesondere können die Punkte der Zahnradachse die Taumelkurve beispielsweise im Uhrzeigersinn beschreiben, während die Punkte der Matrizenachse die entsprechende Taumelkurve gegen den Uhrzeigersinn beschreiben können.

Der Taumelwinkel der Haltevorrichtung mit dem zu bearbeitenden Zahnrad kann gleich dem Taumelwinkel der Matrize sein. In alternativen Ausführungen kann der Taumelwinkel der Haltevorrichtung mit dem zu bearbeitenden Zahnrad unterschiedlich im Vergleich zu dem Taumelwinkel der Matrize sein. Der Matrizen-Taumelpunkt und der Zahnrad-Taumelpunkt befinden sich vorzugsweise in axialer Richtung auf der gleichen Höhe.

Die Erfindung betrifft ferner eine Vorrichtung zur spanlosen Zahnflankenmodifikation eines Zahnrads. Insbesondere kann die Vorrichtung dazu ausgebildet sein das vorstehend beschriebene Verfahren zur spanlosen Zahnflankenmodifikation auszuführen. D.h., soweit im Folgenden nicht explizit anders erwähnt, gelten die vorangegangenen Aussagen, insbesondere in Bezug auf die Haltevorrichtung, die Matrize und/oder das Zahnrad, auch für die Vorrichtung.

Die Vorrichtung zur spanlosen Zahnflankenmodifikation umfasst vorzugsweise eine Haltevorrichtung zum Halten des Zahnrads und eine Matrize zum Bearbeiten des Zahnrads. Die Vorrichtung umfasst ferner eine Ausgangstellung, in welcher das Zahnrad in der Haltevorrichtung gehalten wird, und eine von der Ausgangstellung verschiedene Bearbeitungsstellung, in welcher das Zahnrad in der Haltevorrichtung gehalten wird.

Die Haltevorrichtung kann einen Unterstempel und/oder einen Oberstempel umfassen. Die Haltevorrichtung kann das Zahnrad beispielsweise durch ein axiales Verfahren des Unterstempels und/oder des Oberstempels in der Haltevorrichtung fixieren, insbesondere verspannen. Das Zahnrad wird in der Ausgangstellung vorzugsweise in axialer Richtung zwischen dem Unterstempel und dem Oberstempel gehalten. D.h. der Unterstempel ist in der Ausgangstellung des Zahnrads vorzugsweise mit einer ersten Stirnseite des Zahnrads in Kontakt und der Oberstempel ist in der Ausgangstellung des Zahnrads vorzugsweise mit einer der ersten Stirnseite abgewandten zweiten Stirnseite des Zahnrads in Kontakt.

Wenn im Zuge der Erfindung von einem Unterstempel und einem Oberstempel die Rede ist, soll dies nicht bedeuten, dass der Unterstempel zwangsläufig unterhalb des Oberstempels ausgebildet ist. Vorzugsweise ist der Unterstempel in vertikaler Richtung unterhalb des Oberstempels ausgebildet. In alternativen Ausführungen können der Unterstempel und der Oberstempel auch in horizontaler Richtung aufeinander folgend, d.h. nebeneinander, ausgebildet sein.

Der Unterstempel und der Oberstempel können zur Fixierung des Zahnrads vorzugsweise zeitgleich verfahren werden oder in alternativen Ausführungen kann nur der Oberstempel oder nur der Unterstempel verfahren werden. Beispielsweise kann zum Fixieren des Zahnrads nur der Unterstempel in Richtung des Oberstempels verfahren werden, während der Oberstempel unbewegt bleibt. Auch kann beispielsweise nur der Oberstempel in Richtung des Unterstempels verfahren werden, während der Unterstempel unbewegt bleibt.

Die Haltevorrichtung kann einen Dorn für die Positionierung des Zahnrads umfassen. Das Zahnrad kann insbesondere mittels des Dorns in der Haltevorrichtung positioniert bzw. ausgerichtet werden. Der Dorn kann in der Ausgangstellung der Vorrichtung in oder durch das Zahnrad ragen, um das Zahnrad in der Haltevorrichtung zu positionieren bzw. auszurichten. Vorzugsweise kann der Dorn entlang der Mittelachse des Zahnrads in oder durch das Zahnrad ragen. Der Dorn kann beispielsweise von unten oder von oben in oder durch das Zahnrad ragen.

Der Dorn kann durch den bzw. an dem Unterstempel ausgebildet sein. Der Dorn kann beispielsweise von dem Unterstempel in Richtung des Oberstempels vorragen, vorzugsweise in vertikaler Richtung nach oben vorragen. In der Ausgangstellung ragt der Dorn vorzugsweise in oder durch das Zahnrad. Vorzugsweise ragt der Dorn des Unterstempels in der Ausgangstellung von unten in oder durch das Zahnrad in Richtung des Oberstempels.

Alternativ oder zusätzlich kann der Oberstempel ebenfalls einen Dorn umfassen. Der Dorn des Oberstempels kann von dem Oberstempel in Richtung des Unterstempels vorragen, vorzugsweise in vertikaler Richtung nach unten vorragen. In der Ausgangstellung ragt der Dorn vorzugsweise in oder durch das Zahnrad. Vorzugsweise ragt der Dorn des Oberstempels in der Ausgangstellung von oben in oder durch das Zahnrad in Richtung des Unterstempels.

Weisen sowohl der Unterstempel als auch der Oberstempel einen Dorn auf, ragen die Dorne, wenn sich die Vorrichtung in der Ausgangstellung befindet, vorzugsweise aufeinander zu, ohne sich zu berühren. Alternativ kann der Dorn durch ein separates Bauteil gebildet werden. Vorzugsweise umfasst die Haltevorrichtung zur Bearbeitung eines außenverzahnten Zahnrads einen Dorn.

Alternativ oder zusätzlich kann die Haltevorrichtung eine Einführmaske für die Positionierung des Zahnrads umfassen. Das Zahnrad kann insbesondere mittels der Einführmaske in der Haltevorrichtung positioniert bzw. ausgerichtet werden.

Die Einführmaske kann beispielsweise durch den bzw. in dem Unterstempel ausgebildet sein. Der Unterstempel kann zu diesem Zweck beispielsweise eine Ausnehmung für das Zahnrad aufweisen, in welche das Zahnrad eingelegt und dadurch positioniert bzw. ausgereichtet werden kann. Die Einführmaske kann auch durch ein separates Bauteil gebildet werden.

Alternativ oder zusätzlich kann der Oberstempel eine Einführmaske umfassen. Der Oberstempel kann zu diesem Zweck beispielsweise eine Ausnehmung für das Zahnrad aufweisen, welche beim Verfahren des Ober- und/oder Unterstempels das Zahnrad, vorzugsweise von oben, positioniert bzw. ausgereichtet. Vorzugsweise umfasst die Haltevorrichtung zur Bearbeitung eines innenverzahnten Zahnrads eine Einführmaske.

Das zu bearbeitende Zahnrad umfasst eine Zahnradachse und die Matrize umfasst eine Matrizenachse. Unter der Zahnradachse soll insbesondere die Mittelachse des zu bearbeitenden Zahnrads, vorzugsweise die Rotationsachse des zu bearbeitenden Zahnrads, verstanden werden. Unter der Matrizenachse soll insbesondere die Mittelachse der Matrize verstanden werden. Die Zahnradachse geht in axialer Draufsicht auf das Zahnrad beispielsweise durch den Mittelpunkt des Zahnfußkreises des Zahnrads. Entsprechend geht die Matrizenachse in axialer Draufsicht auf die Matrize beispielsweise durch den Mittelpunkt des Zahnfußkreises der Matrize.

In der Ausgangstellung der Vorrichtung bilden die Matrize und das Zahnrad vorzugsweise ein Innenzahnradpaar. Beispielsweise kann die Matrize durch ein innenverzahntes Zahnrad gebildet sein, welches das Zahnrad, insbesondere das außenverzahnte Zahnrad, in Umfangsrichtung umgibt. In alternativen Ausführungen kann die Matrize ein außenverzahntes Zahnrad sein, welches von dem zu bearbeitenden Zahnrad, insbesondere dem zu bearbeitenden innenverzahnten Zahnrad, in Umfangsrichtung umgeben wird.

Vorzugsweise bilden das Zahnrad und die Matrize in der Ausgangstellung ein Innenzahnradpaar, bei dem jeder Zahn des Zahnrads jeweils einer Zahnlücke der Matrize zuordnungsbar ist. D.h. vorzugsweise weisen das Zahnrad und die Matrize die gleiche Zähnezahl auf. Vorzugsweise ist in der Ausgangsstellung der Vorrichtung jeweils ein Zahn des Zahnrads einer Zahnlücke der Matrize zugewiesen.

Die Matrize kann insbesondere eine Negativform des zu bearbeitenden Zahnrads sein. Die Matrize und das Zahnrad können in der Ausgangsstellung eine Spiel-, Übergangs- oder Presspassung aufweisen. Weisen die Matrize und das Zahnrad in der Ausgangsstellung eine Presspassung auf, ist zwischen dem Zahnrad und der Matrize kein Spalt ausgebildet. Weisen die Matrize und das Zahnrad eine Presspassung auf, werden die Matrize und das Zahnrad vorzugsweise in der Ausgangsstellung ineinander verpresst.

Weisen Sie Matrize und das Zahnrad in der Ausgangsstellung eine Spielpassung auf, kann zwischen der Matrize und dem Zahnrad ein Spalt ausgebildet sein. Ist zwischen der Matrize und dem Zahnrad ein Spalt ausgebildet, kann der Spalt so groß sein, dass in der Ausgangsstellung die Zähne des Zahnrads nicht mit den Zahnlücken der Matrize kämmen. Vorzugsweise ist der Spalt nur so groß, dass die Zähne des Zahnrads mit den Zahnlücken der Matrize in radialer Richtung überlappen. D. h., dass jeder Zahn des Zahnrads wenigstens teilweise radial in eine Zahnlücke der Matrize ragt.

Der Spalt kann nach der Umformung des Zahnrads, insbesondere nach der Umformung der Zahnflanken, größer sein als er in der Ausgangstellung der Vorrichtung war. Insbesondere kann der Spalt im Bereich der axialen Enden der Zahnflanken nach der Durchführung des vorangehend beschriebenen Verfahrens mittels der Vorrichtung, insbesondere nach der Umformung der Zahnflanken, größer sein als in der Ausgangstellung der Vorrichtung. Auch kann der Spalt, insbesondere das Spaltmaß, nach der Durchführung des Verfahrens, insbesondere nach Umformung der Zahnflanken, entlang der Zahnflankenlinie der einzelnen Zähne des Zahnrads variieren.

Der Spalt, insbesondere das Spaltmaß, kann in der Ausgangstellung der Vorrichtung, insbesondere vor der Umformung der Zahnflanken, entlang der Zahnflankenlinie der einzelnen Zähne des Zahnrads variieren. Alternativ kann der Spalt, insbesondere das Spaltmaß, in der Ausgangstellung, insbesondere vor der Umformung der Zahnflanken, entlang der Zahnflankenlinie der einzelnen Zähne des Zahnrads überall gleich groß sein.

Mittels des Spalts, insbesondere des Spaltmaß, kann insbesondere der Grad der durch die Vorrichtung erreichbaren Umformung der Zahnflanken beeinflusst bzw. eingestellt werden. So kann durch einen großen Spalt, insbesondere ein großen Spaltmaß, beispielsweise eine große Totzone eingestellt werden, in deren Bereich keine Umformung des Zahnrads, insbesondere der Zahnflanken, stattfindet.

Vorzugsweise verlaufen die Zahnradachse und die Matrizenachse in der Ausgangsstellung der Vorrichtung parallel, vorzugsweise koaxial, zueinander. Vorzugsweise ist der Abstand zwischen der Zahnradachse und der Matrizenachse in der Ausgangsstellung der Vorrichtung kleiner als der Radius des Zahnrads und/oder der Matrize, je nachdem welches aus Matrize und Zahnrad, das jeweils andere aus Matrize und Zahnrad in Umfangsrichtung umgibt. D.h. die Zahnradachse liegt der radial innerhalb der Matrize oder die Matrizenachse liegt radial innerhalb des Zahnrads.

In der Bearbeitungsstellung der Vorrichtung wird das zu bearbeitende Zahnrad in der Haltevorrichtung gehalten und die Matrizenachse und die Zahnradachse schließen vorzugsweise einen Taumelwinkel α ein. Der Taumelwinkel α ist vorzugsweise ungleich 0°. D.h. in der Bearbeitungsstellung sind die Matrize und das Zahnrad um den Taumelwinkel α gegeneinander verschwenkt. D.h. die Haltevorrichtung mit dem zu bearbeitenden Zahnrad und/oder die Matrize sind/ist vorzugsweise verschwenkbar, insbesondere taumelbar, ausgebildet.

Vorzugsweise bilden das Zahnrad und die Matrize in der Bearbeitungsstellung ein Innenzahnradpaar, bei dem jeder Zahn des Zahnrads mit jeweils einer Zahnlücke der Matrize im Eingriff steht. D.h. vorzugsweise weisen das Zahnrad und die Matrize die gleiche Zähnezahl auf, wobei in der Bearbeitungsstellung jeweils ein Zahn des Zahnrads einer Zahnlücke der Matrize zugewiesen ist.

Vorzugsweise bleiben die Zähne des Zahnrads und die Zähne der Matrize in der Bearbeitungsstellung trotz des Auslenkens der Matrize und/oder der Haltevorrichtung um den Taumelwinkel α in axialer Richtung in Überdeckung, insbesondere vollständig in Überdeckung, miteinander bleiben.

Insbesondere kann die Haltevorrichtung mit dem Zahnrad um einen Zahnrad-Taumelpunkt auf der Zahnradachse taumelbar gelagert sein. Alternativ oder zusätzlich kann die Matrize um einen Matrizen-Taumelpunkt auf der Matrizenachse taumelbar gelagert sein. Vorzugsweise ist die Matrize um den Matrizen-Taumelpunkt taumelbar gelagert, während die Haltevorrichtung im Hinblick auf die Zahnradachse des zu bearbeitenden Zahnrads feststehend ausgebildet ist. In alternativen Ausführungen kann die Haltevorrichtung mit dem Zahnrad um den Zahnrad-Taumelpunkt taumelbar gelagert sein, während die Matrize im Hinblick auf die Matrizenachse feststehend ausgebildet ist. Vorzugsweise führen die Matrize und die Haltevorrichtung eine taumelnde Relativbewegung zueinander aus.

Der Zahnrad-Taumelpunkt kann auf der Zahnradachse in axialer Richtung innerhalb des Zahnrads ausgebildet sein. D.h. vorzugsweise ist der Zahnrad-Taumelpunkt in axialer Richtung zwischen der ersten Stirnseite und der der ersten Stirnseite abgewandten zweiten Stirnseite des Zahnrads ausgebildet. Zur Herstellung einer symmetrischen Breitenballigkeit ist der Zahnrad-Taumelpunkt vorzugsweise in axialer Richtung auf der Mittelinie des Zahnrads ausgebildet. Zur Herstellung einer asymmetrischen Breitenballigkeit weist der Zahnrad-Taumelpunkt vorzugsweise einen Abstand d zu der Mittelinie des Zahnrads auf.

Der Matrizen-Taumelpunkt ist in axialer Richtung vorzugsweise innerhalb der Matrize ausgebildet. D.h. der Matrizen-Taumelpunkt ist vorzugsweise zwischen einer ersten Stirnseite der Matrize und einer der ersten Stirnseite abgewandten zweiten Stirnseite der Matrize ausgebildet. Zur Herstellung einer symmetrischen Breitenballigkeit ist der Matrizen-Taumelpunkt vorzugsweise in axialer Richtung auf der Mittelinie des Zahnrads ausgebildet. Zur Herstellung einer asymmetrischen Breitenballigkeit weist der Matrizen-Taumelpunkt vorzugsweise einen Abstand d zu der Mittelinie des Zahnrads auf.

Zur Herstellung einer symmetrischen Breitenballigkeit kann die Mittellinie der Matrize in der Ausgangsstellung vorzugsweise mit der Mittelinie des Zahnrads zusammenfallen. Zur Herstellung einer asymmetrischen Breitenballigkeit können die Mittellinie der Matrize und die Mittellinie des Zahnrads in der Ausgangsstellung in axialer Richtung einen Abstand d zueinander aufweisen.

Die Matrize kann in Bezug auf die Haltevorrichtung in Richtung der Matrizenachse axial verstellbar sein. Alternativ oder zusätzlich kann die Haltevorrichtung in Bezug auf die Matrize in Richtung der Matrizenachse axial verstellbar sein. Insbesondere kann die Haltevorrichtung mit dem in der Haltevorrichtung fixierten Zahnrad in Richtung der Zahnradachse axial verstellbar sein. Vorzugsweise können die Matrize und die Haltevorrichtung eine axiale Relativbewegung zueinander ausführen.

Durch das axiale Verstellen der Matrize und/oder der Haltevorrichtung in Richtung der Matrizenachse, kann die Vorrichtung, beispielsweise zur Herstellung einer symmetrischen Breitenballigkeit oder einer asymmetrischen Breitenballigkeit, so eingestellt werden, dass die Mittellinie der Matrize in der Ausgangsstellung mit der Mittelinie des Zahnrads zusammenfällt oder die Mittellinie der Matrize in der Ausgangsstellung einen Abstand d zu der Mittelinie des Zahnrads aufweist.

Die Matrize kann vorzugsweise drehunbeweglich in Bezug auf die Matrizenachse ausgebildet sein. D.h. die Matrize ist vorzugsweise nicht um ihre Matrizenachse rotierbar gelagert. Vorzugsweise ist die Haltevorrichtung in Bezug auf die Matrizenachse drehunbeweglich. Insbesondere kann die Haltevorrichtung mit in der Haltevorrichtung fixierten Zahnrad in Bezug auf die Zahnradachse drehunbeweglich gelagert sein. D.h. die Haltevorrichtung kann vorzugsweise weder um die Matrizenachse noch um die Zahnradachse des in der Haltevorrichtung fixierten Zahnrads rotieren.

Die Matrize und das Zahnrad überlappen vorzugsweise in der Ausgangsstellung in axialer Richtung miteinander. Insbesondere können die Matrize und das Zahnrad in der Ausgangsstellung in axialer Richtung vollständig überlappen.

Die Breite der Matrize ist in axialer Richtung vorzugsweise gleich groß oder größer als die Breite des zu bearbeitenden Zahnrads in axialer Richtung. Die Matrize kann beispielsweise mit dem zu bearbeitenden Zahnrad in axialer Richtung beidseitig bündig abschließen. In alternativen Ausführungen kann die Matrize in axialer Richtung einseitig oder beidseitig über das zu bearbeitende Zahnrad vorstehen. Vorzugsweise ist das Zahnrad in axialer Richtung über die gesamte Breite des Zahnrads in Überlappung mit der Matrize.

Die Matrize, insbesondere die Zähne der Matrize, können eine größere Härte aufweisen als das Zahnrad, insbesondere die Zähne des Zahnrads. Ist die Matrize, insbesondere die Zähne der Matrize, härter als das Zahnrad, insbesondere die Zähne des Zahnrads, werden bei einer Taumelbewegung der Matrize und/oder der Haltevorrichtung mit dem darin fixierten Zahnrad vorzugsweise nur die Zähne des Zahnrads umgeformt.

Insbesondere kann die Matrize aufgrund der größeren Härte ihre Form beim Umformen des Zahnrads, insbesondere bei Durchführung des im Vorfeld beschriebenen Verfahrens, beibehalten. Die Matrize kann beispielsweise aus einem Werkzeugstahl gefertigt sein. Das Zahnrad kann beispielsweise in einem Verfahren der Urformung hergestellt sein, beispielsweise in einem Gießverfahren oder Sinterverfahren. Vorzugsweise ist die Matrize aus einem Material hergestellt, welches härter ist als das Material, aus welchem das zu bearbeitende Zahnrad gefertigt ist.

Die Haltevorrichtung kann über einen Aktuator, vorzugsweise über drei Aktuatoren taumelbar gelagert sein. Alternativ oder zusätzlich kann die Matrize über einen Aktuator, vorzugsweise über drei Aktuatoren taumelbar gelagert sein. Vorzugsweise ist eines aus Haltevorrichtung und Matrize über einen Aktuator, vorzugsweise über drei Aktuatoren, taumelbar gelagert, während das andere aus Haltevorrichtung und Matrize feststehend ausgebildet ist. In besonders bevorzugten Ausführungen ist die Haltevorrichtung feststehend ausgebildet und die Matrize über wenigstens einen Aktuator, insbesondere über drei Aktuatoren, taumelbar gelagert.

Insbesondere kann die Haltevorrichtung mittels des wenigstens einen Aktuators um einen Zahnrad-Taumelpunkt in eine Taumelbewegung versetzbar sein. Alternativ oder zusätzlich kann die Matrize mittels des wenigstens einen Aktuators um einen Matrizen-Taumelpunkt in eine Taumelbewegung versetzbar sein. Der Zahnrad-Taumelpunkt der Haltevorrichtung kann vorzugsweise auf der Zahnradachse des in der Haltevorrichtung gehaltenen Zahnrads und/oder auf der Matrizenachse ausgebildet sein. Der Matrizen-Taumelpunkt kann vorzugsweise auf der Matrizenachse und/oder auf der Zahnradachse des in der Haltevorrichtung gehaltenen Zahnrads ausgebildet sein.

Vorzugsweise ist die Haltevorrichtung und/oder die Matrize über drei Aktuatoren taumelbar gelagert. Insbesondere kann eines aus Haltevorrichtung oder Matrize über drei Aktuatoren taumelbar gelagert sein, während das andere aus Haltevorrichtung und Matrize feststehend ist.

Die Aktuatoren sind in Umfangsrichtung der Haltevorrichtung bzw. in Umfangsrichtung der Matrize vorzugsweise in einem Winkelabstand von 120° zueinander ausgebildet. Insbesondere sind die Angriffspunkte der drei Aktuatoren in Umfangsrichtung der Haltevorrichtung bzw. in Umfangsrichtung der Matrize gleichmäßig über den Umfang der Haltevorrichtung bzw. der Matrize verteilt. Der Angriffspunkt eines Aktuators ist dabei der Punkt der Matrize bzw. der Haltevorrichtung, an welchem der entsprechende Aktuator auf die Matrize bzw. die Haltevorrichtung wirkt, insbesondere mit dem die Matrize bzw. die Haltevorrichtung direkt oder indirekt verbunden ist.

Für den Fall, dass die Haltevorrichtung mit dem Zahnrad bzw. die Matrize in der Ausgangstellung beispielsweise im Wesentlichen parallel zu der horizontalen Ebene ausgebildet ist, ändern die Angriffspunkte des Aktuators oder der Aktuatoren ausschließlich die vertikale Lage wenn die Haltevorrichtung mit dem Zahnrad und/oder die Matrize eine reine Taumelbewegung ausführen bzw. ausführt. Insbesondere ändert der Angriffspunkt oder die Angriffspunkte in der Bearbeitungsstellung nur ihre vertikale Position.

Ist die Haltevorrichtung und/oder die Matrize über mindestens zwei Aktuatoren, insbesondere über mindestens drei Aktuatoren, taumelbar gelagert, können die Aktuatoren beispielsweise durch jeweils einen axial verstellbaren Stempel ausgebildet sein, welcher die Haltevorrichtung bzw. die Matrize an dem entsprechenden Angriffspunkt in axialer Richtung verstellen kann, insbesondere absenken oder anheben kann. Durch eine gezielte Ansteuerung der Aktuatoren kann die Haltevorrichtung bzw. die Matrize in eine Taumelbewegung versetzt werden.

Die Erfindung betrifft ferner ein Zahnrad, welches nach dem Verfahren zur spanlosen Zahnflankenmodifikation und/oder mittels der Vorrichtung zur Spanlosen Zahnflankenmodifikation bearbeitet wurde. Insbesondere betrifft die Erfindung ein Zahnrad, bei welchem eine Breitenballigkeit durch das vorangegangene Verfahren und/oder mittels der Vorrichtung zur Spanlosen Zahnflankenmodifikation hergestellt wurde.

Das Zahnrad unterscheidet sich von einem Zahnrad, welches beispielsweise mittels Wälzschleifen nachbearbeitet wurde, insbesondere in der Riefenbildung. Ein Zahnrad, welches mittels des vorangegangenen Verfahrens nachbearbeitet wurde, weist beispielsweise an den Zahnflanken Riefen auf, welche in axialer Richtung verlaufen. D.h. die Riefen verlaufen in Richtung der Zahnflankenlinie. Des Weiteren können die Zahnflanken im Bereich der Umformung eine erhöhte Festigkeit aufweisen.

Die Erfindung wird nachfolgend anhand von Ausführungsbeispielen erläutert. In den Ausführungsbeispielen offenbarte Merkmale bilden die Gegenstände der Ansprüche und der vorstehend erläuterten Ausgestaltungen vorteilhaft weiter.

Es zeigen:
- Figur 1:: Querschnitt einer schematischen Darstellung einer Vorrichtung zur spanlosen Zahnflankenmodifikation ohne zu bearbeitendes Zahnrad;
- Figur 2:: Querschnitt einer schematischen Darstellung einer Vorrichtung zur spanlosen Herstellung einer symmetrischen bzw. asymmetrischen Breitenballigkeit mit Zahnrad;
- Figur 3:: Schematische Darstellung der Ausgangsposition zur spanlosen Herstellung einer symmetrischen bzw. asymmetrischen Breitenballigkeit;
- Figur 4:: Schematische Darstellung einer ersten Bearbeitungsstellung zur spanlosen Herstellung einer symmetrischen bzw. asymmetrischen Breitenballigkeit;
- Figur 5:: Schematische Darstellung einer zweiten Bearbeitungsstellung zur spanlosen Herstellung einer symmetrischen bzw. asymmetrischen Breitenballigkeit;
- Figur 6:: Isometrische Ansicht einer innenverzahnten Matrize;
- Figur 7:: Isometrische Ansicht eines innenverzahnten Zahnrads vor der Zahnflankenmodifikation;
- Figur 7a:: Detailansicht des Zahnrads aus Figur 7
- Figur 8:: Isometrische Ansicht des innenverzahnten Zahnrads aus Figur 7 nach der spanlosen Zahnflankenmodifikation;
- Figur 8a:: Detailansicht des Zahnrads aus Figur 8
- Figur 9:: Isometrische Ansicht eines außenverzahnten Zahnrads vor der spanlosen Zahnflankenmodifikation;
- Figur 9a:: Detailansicht des Zahnrads aus Figur 9;
- Figur 10:: Isometrische Ansicht des Zahnrads aus Figur 9 nach der spanlosen Zahnflankenmodifikation;
- Figur 10a:: Detailansicht des Zahnrads aus Figur 10.

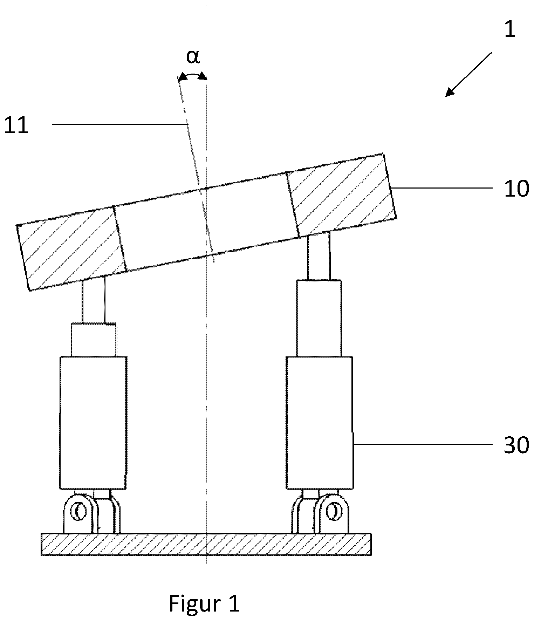

Figur 1 zeigt einen Querschnitt einer schematischen Darstellung eines Ausführungsbeispiels einer erfindungsgemäßen Vorrichtung 1 zur spanlosen Zahnflankenmodifikation. Die Vorrichtung 1 umfasst eine Matrize 10, welche um einen Matrizen-Taumelpunkt taumelbar gelagert ist. In der Figur 1 ist die Matrize 10 in einer Bearbeitungsstellung, in welcher die Matrizenachse 11 um einen Taumelwinkel α ausgelenkt ist, dargestellt. In Figur 1 ist keine Haltevorrichtung zur Fixierung eines Zahnrads dargestellt.

Die Matrize 10 ist in dem Ausführungsbeispiel durch ein innenverzahntes Zahnrad gebildet, welches ein nicht dargestelltes Zahnrad, insbesondere ein außenverzahntes Zahnrad, in Umfangsrichtung umgibt. In alternativen Ausführungen kann die Matrize 10 auch ein außenverzahntes Zahnrad sein, welches von dem zu bearbeitenden Zahnrad, insbesondere dem zu bearbeitenden innenverzahnten Zahnrad, in Umfangsrichtung umgeben wird.

Die Matrize 10 ist mittels drei Aktuatoren 30, von denen aufgrund der Schnittdarstellung nur zwei sichtbar sind, taumelbar gelagert. Die Aktuatoren 30 sind in Umfangsrichtung der Matrize 10 gleichmäßig über den Umfang der Matrize 10 verteilt. Insbesondere greifen die Aktuatoren 30 in einem Winkelabstand von 120° an der Matrize an. Die Aktuatoren 30 sind jeweils über ein Gelenk mit der Matrize 10 verbunden. Des Weiteren weisen die Aktuatoren 30 jeweils einen axialverstellbaren Stempel auf. Durch Ansteuerung der Aktuatoren 30 und Variation der axialen Erstreckung der einzelnen Aktuatoren kann die Matrize 10 in eine Taumelbewegung um einen Matrizen-Taumelpunkt versetzt werden.

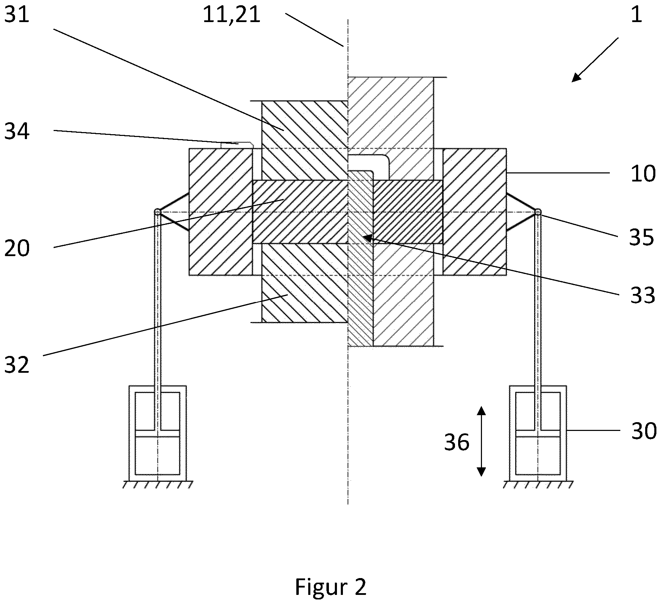

Figur 2 zeigt ein weiteres Ausführungsbeispiel einer erfindungsgemäßen Vorrichtung 1 in einer Ausgangstellung. Das Ausführungsbeispiel der Figur 2 unterscheidet sich insofern von dem Ausführungsbeispiel der Figur 1, dass die Vorrichtung 1 eine Haltevorrichtung zur Fixierung eines zu bearbeitenden Zahnrads 20 umfasst. Auf der linken Seite der Darstellung der Figur 2 umfasst die Haltevorrichtung einen Unterstempel 32 und einen Oberstempel 31. Auf der rechten Seite der Darstellung der Figur 2 umfasst die Haltevorrichtung neben einem Unterstempel 32 und einem Oberstempel 31 ferner einen Dorn 33 zur Positionierung des Zahnrads 20.

Die Haltevorrichtung fixiert das Zahnrad 20 durch ein axiales Verfahren des Unterstempels 32 und/oder des Oberstempels 31. Insbesondere kann das Zahnrad 20 durch axiales Verfahren des Unterstempels 32 und/oder des Oberstempels 31 axial verspannt werden. Der Unterstempel 32 hat dabei mit einer ersten Stirnseite des Zahnrads 20, insbesondere der unteren Stirnseite, Kontakt und der Oberstempel hat mit einer der ersten Stirnseite abgewandten zweiten Stirnseite des Zahnrads, insbesondere der oberen Stirnseite Kontakt.

Auf der rechten Seite der Darstellung der Figur 2 ist die Haltevorrichtung zusätzlich mit einem Dorn 33 für die Positionierung des Zahnrads 20 dargestellt. Das Zahnrad 20 kann insbesondere mittels des Dorns in der Haltevorrichtung positioniert bzw. ausgerichtet werden. Der Dorn 33 durchragt das Zahnrad 20 dabei entlang der Zahnradachse 21. Der Dorn 33 ist mit dem Unterstempel 32 verbunden und durchragt das Zahnrad 20 von unten nach oben in Richtung des Oberstempels 31. Der Oberstempel 31 weist eine Ausnehmung aus, in welche der Dorn 33 hineinragen kann. Durch die Ausnehmung ist sichergestellt, dass der Dorn 33 das axiale Verfahren des Unterstempels 32 und/oder des Oberstempels nicht behindert.

Gemäß dem Ausführungsbeispiel der Figur 2 bilden die Matrize 10 und das Zahnrad 20 ein Innenzahnradpaar. Die Matrizenachse 11 und die Zahnradachse 21 verlaufen dabei in der Ausgangstellung der Vorrichtung 1 koaxial zueinander. Bei dem Innenzahnradpaar gemäß dem Ausführungsbeispiel der Figur 2 umgibt die Matrize 10 das Zahnrad 20. Das Zahnrad 20 ist dabei ein außenverzahntes Zahnrad und die Matrize 10 ein innenverzahntes Zahnrad. Die Matrize 10 ist insbesondere eine Negativform des zu bearbeitenden Zahnrads 20. In alternativen Ausführungen kann beispielsweise das Zahnrad 20 ein innenverzahntes Zahnrad sein und die Matrize 10 ein außenverzahntes Zahnrad, welches von dem Zahnrad 20 umgeben wird.

Das Zahnrad 20 und die Matrize 10 weisen die gleiche Zähnezahl auf, wobei in der Ausgangstellung jeweils ein Zahn des Zahnrads einer Zahnlücke der Matrize zugewiesen ist. Die Matrize 10 und das Zahnrad 20 können in der Ausgangsstellung eine Spiel-, Übergangs- oder Presspassung aufweisen. Weisen die Matrize 10 und das Zahnrad 20 in der Ausgangsstellung eine Presspassung auf, ist zwischen dem Zahnrad 20 und der Matrize 10 kein Spalt ausgebildet. Weisen Sie Matrize 10 und das Zahnrad 20 in der Ausgangsstellung eine Spielpassung auf, kann zwischen der Matrize 10 und dem Zahnrad 20 ein Spalt ausgebildet sein.

Die Matrize 10, insbesondere die Zähne der Matrize 10, weisen eine größere Härte als das Zahnrad 20, insbesondere als die Zähne des Zahnrads 20, auf. Auf diese Weise werden bei einer Taumelbewegung der Matrize 10 nur die Zähne des Zahnrads 20 umgeformt.

Die Matrize 10 und das Zahnrad 20 überlappen in axialer Richtung miteinander. Insbesondere überlappen die Matrize 10 und das Zahnrad 20 in der Ausgangsstellung in axialer Richtung vollständig. Die Breite der Matrize 10 ist in axialer Richtung größer als die Breite des zu bearbeitenden Zahnrads 20 in axialer Richtung. Gemäß dem Ausführungsbeispiels steht die Matrize 10 in axialer Richtung beidseitig über das zu bearbeitende Zahnrad vor, so dass das Zahnrad 20 in axialer Richtung über die gesamte Breite des Zahnrads 20 in Überlappung mit der Matrize 10 ist.

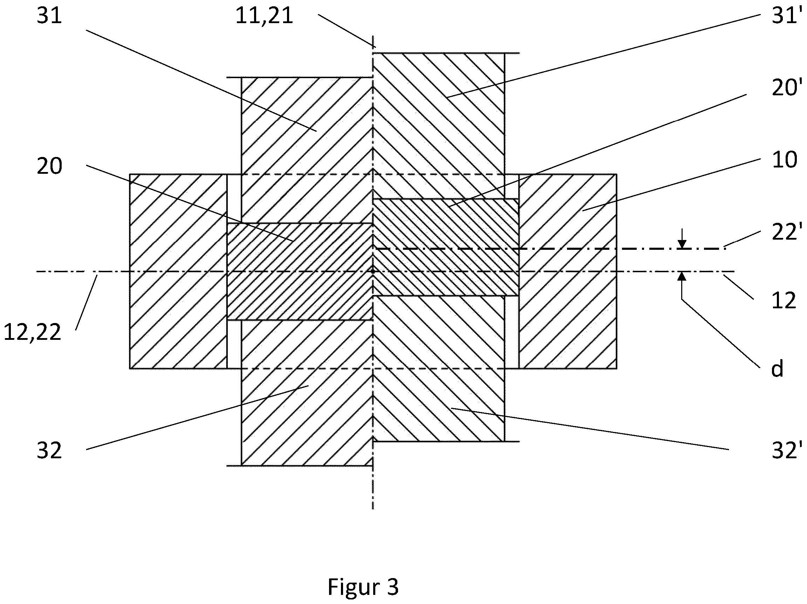

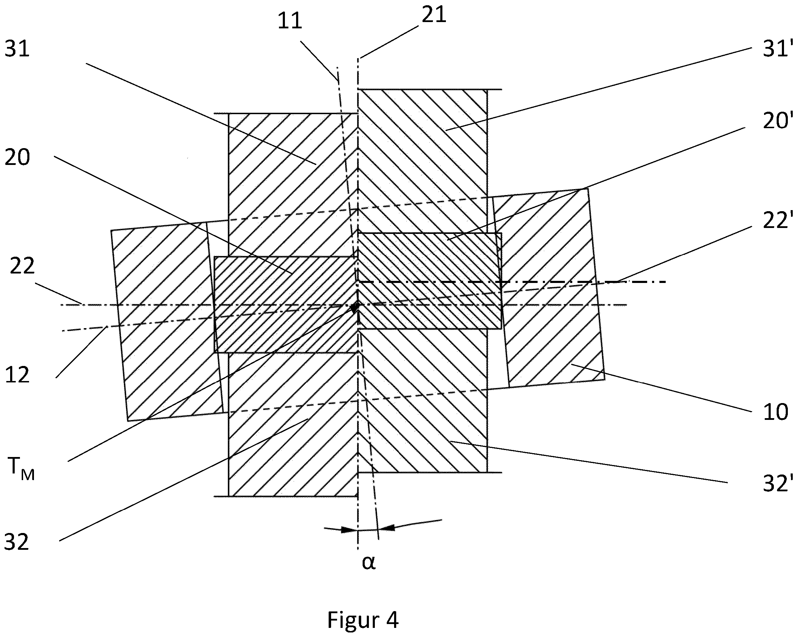

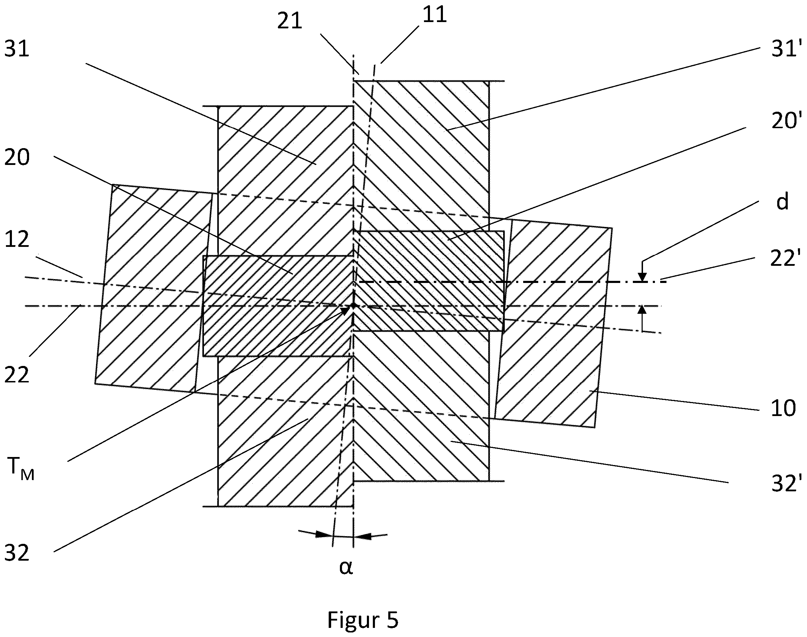

Im Folgenden soll anhand der Figuren 3 bis 5 auf das Verfahren zur spanlosen Zahnflankenmodifikation eingegangen werden. Figur 3 zeigt eine schematische Darstellung der Matrize 10 und des Zahnrads 20 in der Ausgangsstellung des Verfahrens. Figur 4 zeigt eine schematische Darstellung der Matrize 10 und des Zahnrads 20 in einer ersten Bearbeitungsstellung des Verfahrens und Figur 5 in einer zweiten Bearbeitungsstellung.

Jeweils auf der rechten Seite der Figuren ist das spanlose Verfahren zur Zahnflankenmodifikation einer asymmetrischen Breitenballigkeit schematisch dargestellt. Entsprechend ist auf der linken Seite der Figuren das Verfahren zur Herstellung einer symmetrischen Breitenballigkeit schematisch dargestellt.

In den Figuren 3 bis 5 bilden die Matrize 10 und das Zahnrad 20 ein Innenzahnradpaar gemäß der Figur 2. Daher soll an dieser Stelle auf die vorangegangenen Ausführungen verwiesen werden.

Figur 3 zeigt die Ausgangsstellung der Matrize 10 und des Zahnrads 20. In der Ausgangsstellung verlaufen die Zahnradachse 11 und die Matrizenachse 21 parallel, insbesondere koaxial zueinander. Zur Herstellung einer symmetrischen Breitenballigkeit liegen die Mittellinie 22 des Zahnrads 20 und die Mittellinie 12 der Matrize 10, wie beispielsweise auf der linken Seite der Figur 3 zu sehen ist, in der Ausgangsstellung aufeinander. Im Gegensatz dazu weisen die Mittellinie 22' des Zahnrads 20 und die Mittellinie 12 der Matrize 10 zur Herstellung einer asymmetrischen Breitenballigkeit einen Abstand d zueinander auf.

Der Abstand d kann beispielsweise durch ein gemeinsames Verfahren des Unterstempels 32' und des Oberstempels 31' mit dem zwischen dem Unterstempel 32' und dem Oberstempel 31' gehaltenen Zahnrad 20 in axialer Richtung erreicht werden. Alternativ oder zusätzlich kann beispielsweise auch die Matrize 10 in axialer Richtung verfahren werden.

Die Matrize 10 ist um den Matrizen-Taumelpunkt T_{M} taumelbar gelagert und kann um den Matrize-Taumelpunkt T_{M} eine Taumelbewegung ausführen. Der Matrizen-Taumelpunkt T_{M} wird im vorliegenden Ausführungsbeispiel durch den Schnittpunkt der Matrizenachse 11 und der Mittelinie 12 der Matrize 10 gebildet. Die Mittelinie 12 der Matrize 10 ist dabei die Linie, welche die Matrize 10 in dem gezeigten axialen Querschnitt in axialer Richtung mittig halbiert.

Zur Herstellung einer symmetrischen Breitenballigkeit liegt der Matrizen-Taumelpunkt T_{M} gleichfalls auf der Mittelinie 22 des Zahnrads 20. Zur Herstellung einer asymmetrischen Breitenballigkeit weist der Matrizen-Taumelpunkt T_{M} den Abstand d die zur Mittelinie 22 des Zahnrads 20 auf.

Zur Herstellung der symmetrischen Breitenballigkeit bzw. der asymmetrischen Breitenballigkeit führt die Matrize 10 eine Taumelbewegung um den Matrizen-Taumelpunkt T_{M} aus, sodass die Matrize 10, insbesondere Zahnflanken der Matrize 10, partiell Druck auf das Zahnrad 20, insbesondere auf die Zahnflanken des Zahnrads 20, ausübt. Durch die Taumelbewegung der Matrize 10 wird die Matrizenachse 11 um den Taumelwinkel α ausgelenkt, sodass beispielsweise auch die Zahnflanken der Matrize 10 um den Taumelwinkel α ausgelenkt werden. Da die Zähne der Matrize 10 in die Zahnlücken des Zahnrads 20 eingreifen, wird durch das Verschwenken der Spalt zwischen der Matrize 10 und dem Zahnrad 20 partiell überwunden, sodass die Matrize 10 an diesen Stellen auf das Zahnrad 20, insbesondere auf die Zahnflanken des Zahnrads 20, drückt. Auf diese Weise kann das Zahnrad 20 partiell umgeformt werden.

Die Figuren 4 und 5 zeigen die Matrize 10 in einer ersten Bearbeitungsstellung und in einer zweiten Bearbeitungsstellung, d.h. zu zwei unterschiedlichen Zeitpunkten der Taumelbewegung. Bei der Taumelbewegung der Matrize 10 wird die Matrizenachse 11 aus der Ausgangstellung um einen Taumelwinkel α ausgelenkt, insbesondere verschwenkt. Der Taumelwinkel α ist dabei ungleich 0° ist. Durch die Einstellung des Taumelwinkels α lässt sich die Zahnflankenmodifikation, insbesondere die Breitenballigkeit, steuern und definieren. So kann ein größerer Taumelwinkel α beispielsweise eine größere Umformung bewirken als ein kleinerer Taumelwinkel.

Wie in den Figuren 4 und 5 dargestellt überlappt die Matrize 10 das Zahnrad 20 in der Bearbeitungsstellung in axialer Richtung vollständig. Insbesondere weist die Matrize 10 eine axiale Erstreckung auf, die größer ist als die axiale Erstreckung des Zahnrads 20, so dass trotz des Auslenkens der Matrize 10 um den Taumelwinkel α das Zahnrad 20 und die Matrize 10 in axialer Richtung in Überdeckung miteinander bleiben. Das Zahnrad 20 und die Matrize 10 bilden in der Bearbeitungsstellung vorzugsweise weiterhin ein Innenzahnradpaar, wobei vorzugsweise jeder Zahn des Zahnrads 20 mit einer Zahnlücke der Matrize 10 überlappt.

Die Punkte der Matrizenachse 11 beschreiben während der Taumelbewegung jeweils eine Taumelkurve. Die Taumelkurven der Matrizenachse 11 weisen beispielsweise für alle Punkte eine kreisförmige Form auf. Das bedeutet, dass die einzelnen Punkte der Matrizenachse 11, mit Ausnahme des Matrizen-Taumelpunkts T_{M}, einer kreisförmige Taumelkurve folgen. Dabei nehmen die Radien der Taumelkurven für die einzelnen Punkte mit dem Abstand zu dem Matrizen-Taumelpunkt T_{M} zu.

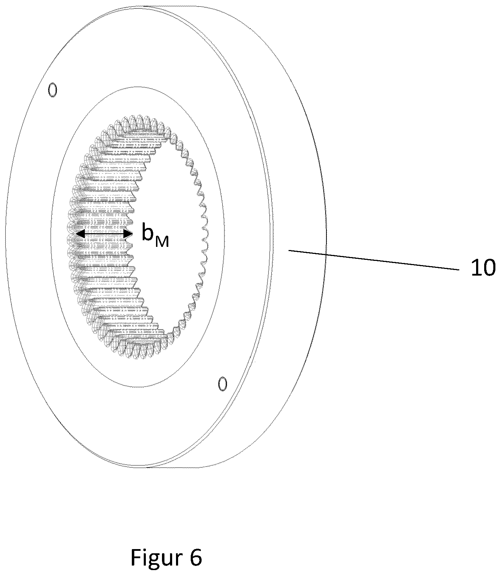

Figur 6 zeigt ein Beispiel für eine Matrize 10 zur spanlosen Zahnflankenmodifikation. Im vorliegenden Ausführungsbeispiel wird die Matrize durch ein innenverzahntes Zahnrad gebildet, welches das zu bearbeitende Zahnrad radial außen umgeben kann. Die Matrize 10, insbesondere die Zähne der Matrize 10, weisen in axialer Richtung eine Zahnbreite b_{M} auf. Die Matrize 10 kann während dem Verfahren ein zu bearbeitendes Zahnrad radial außen umgeben, wobei die Zähne des Zahnrads mit den Zahnlücken der Matrize 10 kämmen.

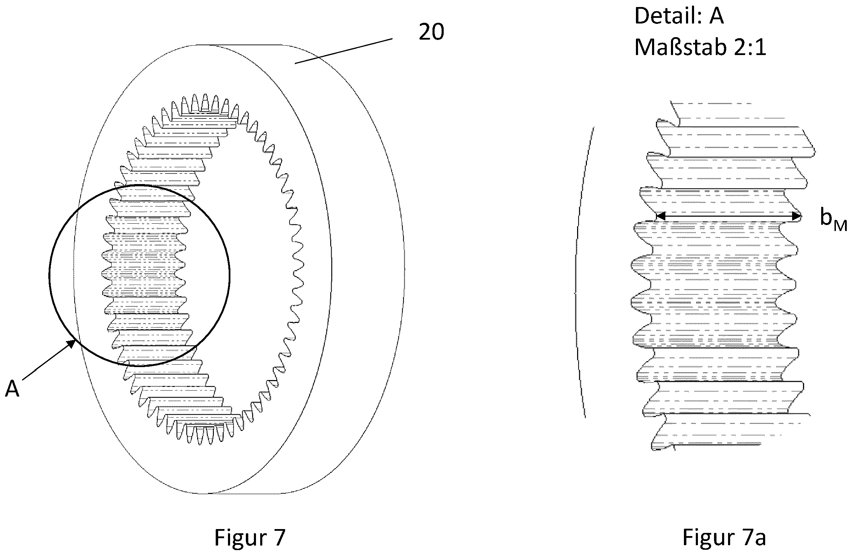

Die Figuren 7 und 7a zeigen ein Ausführungsbeispiel für ein zu bearbeitendes innenverzahntes Zahnrad 20. Das Zahnrad 20 ist in den Figuren 7 und 7a vor der spanlosen Zahnflankenmodifikation zu sehen. Die Zahnflanken weisen, wie beispielsweise in der Figur 7a zu sehen ist, eine gerade Zahnflankenlinie über die gesamte Breite des Zahnrads 20 auf.

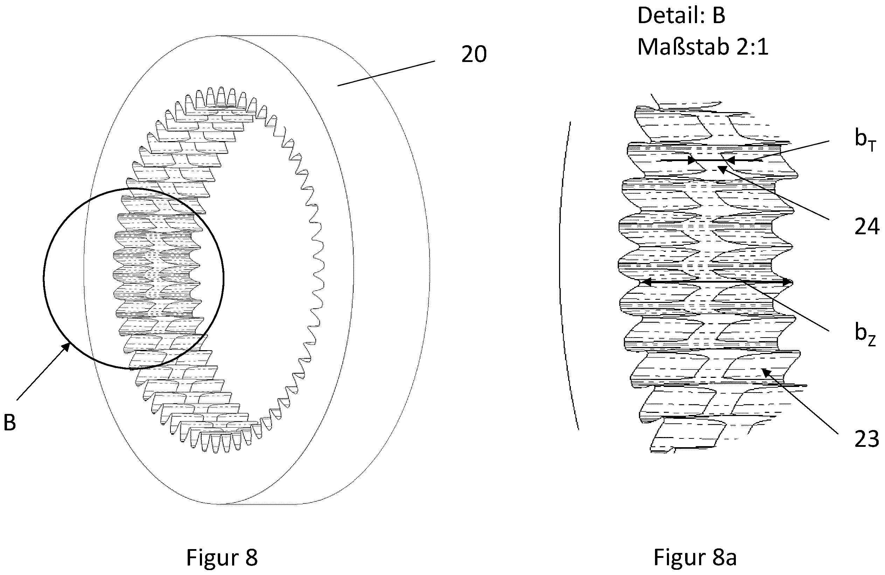

Die Figuren 8 und 8A zeigen das Zahnrad aus der Figur 7, nachdem die Zahnflanken des Zahnrads 20 modifiziert wurden. Insbesondere nachdem die Zahnflanken des Zahnrads 20 mittels der erfindungsgemäßen Vorrichtung bzw. durch das erfindungsgemäße Verfahren bearbeitet wurden. Wie insbesondere in der Figur 8a zu erkennen ist, weisen die Zahnflanken des Zahnrads 20 eine symmetrische Breitenballigkeit auf. Die symmetrische Breitenballigkeit zeichnet sich dadurch aus, dass die Materialrücknahme 23 bzw. Umformung 23 an den beiden axialen Enden der jeweiligen Zahnflanken gleich groß ist. Die axialen Endbereiche mit der Materialrücknahme 23 bzw. Umformung 23entsprechen dabei den Bereichen, an welchen die Matrize 10 partiell Druck auf die Zahnflanken ausgeübt hat und diese umgeformt hat.

Figur 8a zeigt auch eine Totzone 24, in welchen keine Umformung der Zahnflanken stattgefunden hat. Die Breite b_{T} der Totzone ist dabei proportional zu dem Spalt zwischen Matrize 10 und Zahnrad 20 in der Ausgangsstellung der erfindungsgemäßen Vorrichtung bzw. des erfindungsgemäßen Verfahrens. Wie in den Figuren 8 und 8a zu sehen ist, ist die Totzone in axialer Richtung in der Mitte der Zahnflanken ausgebildet. In diesem Fall spricht man von einer symmetrischen Breitenballigkeit.

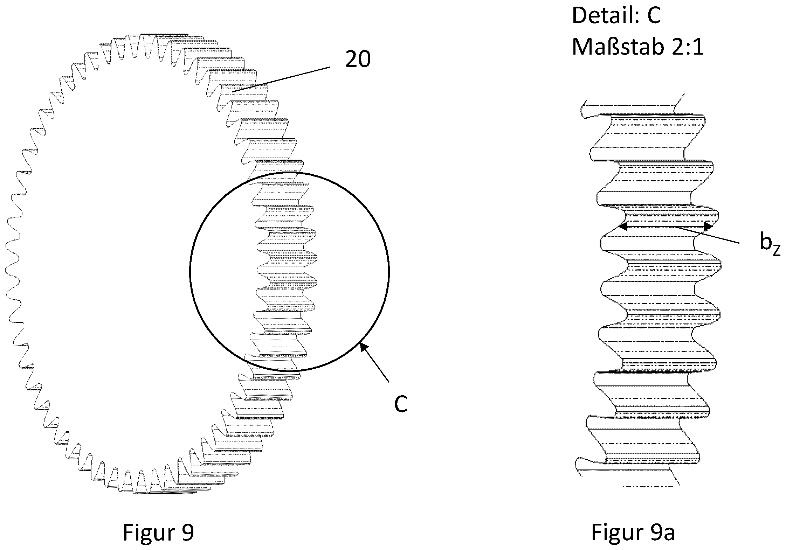

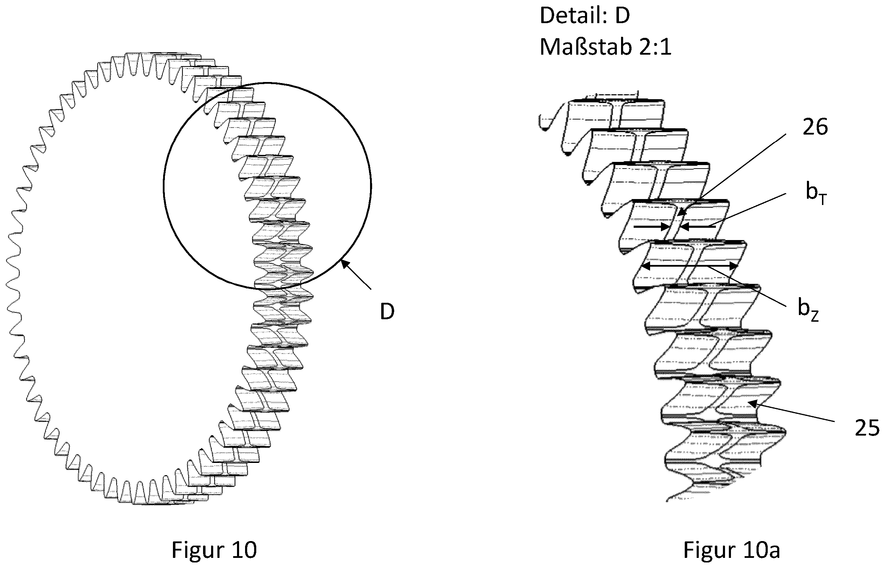

Die Figuren 9 bis 10a zeigen ein Zahnrad 20 vor und nach der Zahnflankenmodifikation, wobei sich das Zahnrad 20 der Figuren 9 bis 10a von dem Zahnrad 20 der Figuren 7 bis 8a ausschließlich in der Art der Verzahnung unterschiedet. So handelt es sich bei dem Zahnrad 20 der Figuren 9 bis 10a um ein außenverzahntes Zahnrad, während die Figuren 7 bis 8a ein innenverzahntes Zahnrad zeigen. Im Übrigen soll auf die Ausführungen zu den Figuren 7 bis 8a verwiesen werden.

## Patentansprüche

1. Verfahren zur spanlosen Zahnflankenmodifikation, insbesondere zur spanlosen Herstellung einer Breitenballigkeit, bei einem Zahnrad (20), bei dem
1.1. das Zahnrad (20) in einer Haltevorrichtung (31, 32, 33, 34) fixiert wird,
1.2. das Zahnrad (20) mit einer Matrize (10) eine Ausgangstellung einnimmt, bei der das Zahnrad (20) und die Matrize (10) ein Innenzahnradpaar bilden,
1.3. die Haltevorrichtung (31, 32, 33, 34) mit dem Zahnrad (20) eine Taumelbewegung um einen Zahnrad-Taumelpunkt auf einer Zahnradachse (21) ausführt, und/oder
1.4. die Matrize (10) eine Taumelbewegung um einen Matrizen-Taumelpunkt (T_{M}) auf einer Matrizenachse (11) ausführt,
1.5. so dass die Matrize (10), insbesondere Zahnflanken der Matrize (10), partiell Druck auf die Zahnflanken (23; 25) des Zahnrads (20) ausübt und die Zahnflanken (23; 25) des Zahnrads (23;25) umformt.

2. Verfahren nach dem vorhergehenden Anspruch, bei dem der Zahnrad-Taumelpunkt durch den Schnittpunkt der Zahnradachse (21) mit einer Mittellinie (22, 22') des Zahnrads (20) gebildet wird und/oder der Matrizen-Taumelpunkt (T_{M}) durch den Schnittpunkt der Matrizenachse (11) mit der Mittellinie (12) der Matrize (10) gebildet wird.

3. Verfahren nach dem vorhergehenden Anspruch, bei dem das Zahnrad (20) durch ein axiales Verfahren eines Unterstempels (32) und/oder eines Oberstempels (31) der Haltevorrichtung (31, 32, 33, 34) in der Haltevorrichtung (31, 32, 33, 34) fixiert, insbesondere axial verspannt, wird.

4. Verfahren nach einem der vorhergehenden Ansprüche, bei dem die Haltevorrichtung (31, 32, 33, 34) und/oder die Matrize (10) eine einmalige zyklische Taumelbewegung ausführt oder wobei die Haltevorrichtung (31, 32, 33, 34) und/oder die Matrize (10) eine mehrfach zyklische Taumelbewegung ausführt.

5. Verfahren nach einem der vorhergehenden Ansprüche, bei dem zum Herstellen einer symmetrischen Breitenballigkeit der Zahnrad-Taumelpunkt und/oder der Matrizen-Taumelpunkt (T_{M}) auf einer Mittellinie (22) des Zahnrads (20) ausgebildet ist, und bei dem zum Herstellen einer asymmetrischen Breitenballigkeit der Zahnrad-Taumelpunkt und/oder der Matrizen-Taumelpunkt (T_{M}) in axialer Richtung einen Abstand d zur Mittelinie (22') des Zahnrads (20) ausgebildet ist.

6. Verfahren nach einem der vorhergehenden Ansprüche, bei dem im Bereich einer Totzone (23; 26) keine Umformung des Zahnrads (20), insbesondere der Zahnflanken (23; 25), stattfindet und eine Breite b_{T} der Totzone in axialer Richtung proportional zu einem Radialspalt zwischen der Matrize (10) und dem Zahnrad (20) ist.

7. Vorrichtung zur spanlosen Zahnflankenmodifikation, insbesondere zur spanlosen Herstellung einer Breitenballigkeit, bei einem Zahnrad (20), insbesondere zum Ausführen des Verfahrens nach einem der vorhergehenden Ansprüche, umfassend:
7.1. eine Haltevorrichtung (31, 32, 33, 34) zum Halten des Zahnrads (20),
7.2. eine Matrize (10) zum Bearbeiten des Zahnrads (20),
7.3. wobei das zu bearbeitende Zahnrad (20) eine Zahnradachse (21) umfasst und die Matrize (10) eine Matrizenachse (11) umfasst, und
7.4. wobei das zu bearbeitende Zahnrad (20) in einer Ausgangstellung der Vorrichtung in der Haltevorrichtung (31, 32, 33, 34) gehalten wird und die Matrizenachse (11) und die Zahnradachse (21) parallel, vorzugsweise koaxial, zueinander verlaufen, und
7.5. wobei das zu bearbeitende Zahnrad (20) in einer Bearbeitungsstellung der Vorrichtung in der Haltevorrichtung (31, 32, 33, 34) gehalten wird und die Matrizenachse (11) und die Zahnradachse (21) einen Taumelwinkel α einschließen,
7.6. wobei die Haltevorrichtung (31, 32, 33, 34) mit dem Zahnrad (20) um einen Zahnrad-Taumelpunkt auf der Zahnradachse (21) taumelbar gelagert ist und/oder die Matrize (10) um einen Matrizen-Taumelpunkt (T_{M}) auf der Matrizenachse (11) taumelbar gelagert ist, und
7.7. wobei das Zahnrad (20) und die Matrize (10) in der Ausgangstellung der Vorrichtung ein Innenzahnradpaar bilden.

8. Vorrichtung nach dem vorhergehenden Anspruch, wobei die Haltevorrichtung (31, 32, 33, 34) oder die Matrize (10) über einen Aktuator (30), vorzugsweise über drei Aktuatoren (30), taumelbar gelagert ist, und wobei die Haltevorrichtung (31, 32, 33, 34) mittels des Aktuators (30), vorzugsweise mittels der drei Aktuatoren (30), in eine Taumelbewegung um den Zahnrad-Taumelpunkt versetzbar ist oder die Matrize (10) mittels des Aktuators (30), vorzugsweise mittels der drei Aktuatoren (30), in eine Taumelbewegung um den Matrizen-Taumelpunkt (T_{M}) versetzbar ist.

9. Vorrichtung nach einem der zwei vorhergehenden Ansprüche, wobei die Haltevorrichtung (31, 32, 33, 34) oder die Matrize (10) über drei Aktuatoren (30) taumelbar gelagert ist, und die Aktuatoren (30) in Umfangsrichtung der Haltevorrichtung (31, 32, 33, 34) oder in Umfangsrichtung der Matrize (10) einen Winkelabstand von 120° zueinander haben, und wobei die Haltevorrichtung (31, 32, 33, 34) mittels der Aktuatoren (30), in eine Taumelbewegung um den Zahnrad-Taumelpunkt versetzbar ist oder die Matrize (10) mittels der Aktuatoren (30) in eine Taumelbewegung um den Matrizen-Taumelpunkt (T_{M}) versetzbar ist.

10. Vorrichtung nach einem der drei vorhergehenden Ansprüche, wobei eine Mittellinie (12) die Matrize (10) zum Herstellen einer symmetrischen Breitenballigkeit in der Ausgangstellung mit einer Mittellinie des Zahnrads (22) zusammenfällt, und wobei die Mittellinie (12) die Matrize (10) zum Herstellen einer asymmetrischen Breitenballigkeit und die Mittellinie des Zahnrads (22) in der Ausgangstellung in axialer Richtung einen Abstand d zueinander aufweisen.

11. Vorrichtung nach einem der vier vorhergehenden Ansprüche, wobei die Matrize (10) und das zu bearbeitende Zahnrad (20) die gleiche Zähnezahl aufweisen und die Matrize (10) eine Negativform des zu bearbeitenden Zahnrads (20) ist, und wobei die Matrize (10) und das zu bearbeitende Zahnrad (20) eine Presspassung, Übergangspassung oder Spielpassung zueinander aufweisen.

12. Vorrichtung nach einem der fünf vorhergehenden Ansprüche, wobei die Matrize (10), insbesondere die Zähne der Matrize (10), eine größere Härte aufweisen als das Zahnrad (20), insbesondere die Zähne des Zahnrads (20).

13. Vorrichtung nach einem der sechs vorhergehenden Ansprüche, wobei die Haltevorrichtung (31, 32, 33, 34) einen Oberstempel (31) und einen Unterstempel (32) umfasst und das Zahnrad (20) zwischen dem Oberstempel (31) und dem Unterstempel (32) axial eingespannt werden kann, und wobei die Haltevorrichtung (31, 32, 33, 34) zusätzlich vorzugsweise einen Dorn (33) und/oder eine Einführmaske (34) umfasst und das Zahnrad (20) mittels des Dorns (33) und/oder Einführmaske (34) in der Haltevorrichtung (31, 32, 33, 34) positionierbar.

14. Vorrichtung nach einem der sieben vorhergehenden Ansprüche, wobei die Matrize (10) in Bezug auf die Haltevorrichtung (31, 32, 33, 34) in Richtung der Matrizenachse (11) axial verstellbar ist und/oder die Haltevorrichtung (31, 32, 33, 34) in Bezug auf die Matrize (10) in Richtung der Matrizenachse (11) axial verstellbar ist.

15. Vorrichtung nach einem der acht vorhergehenden Ansprüche, wobei die Matrize (10) drehunbeweglich in Bezug auf die Matrizenachse (11) ist und die Haltevorrichtung (31, 32, 33, 34) drehunbeweglich in Bezug auf die Zahnradachse (21) ist.

16. Vorrichtung nach einem der neun vorhergehenden Ansprüche, wobei sich die Matrize (10) und das Zahnrad (20) in der Ausgangstellung in axialer Richtung überlappen, vorzugsweise vollständig überlappen, und wobei die Breite der Matrize (10) sich in axialer Richtung gleich groß oder größer ist als die Breite des zu bearbeitenden Zahnrads (20) in axialer Richtung ist.

17. Zahnrad mit einer Breitenballigkeit entlang der Zahnflanken (23, 25) hergestellt nach dem Verfahren nach einem der Ansprüche 1 bis 6 und/oder mittels der Vorrichtung nach einem der Ansprüche 7 bis 16, wobei die Zahnflanken (23, 25) im Bereich der Umformung eine erhöhte Festigkeit aufweisen.
